(19) Europäisches Patentamt
European Patent Office
Office européen des brevets

(11) EP 4 597 636 A1

(12) EUROPEAN PATENT APPLICATION
published in accordance with Art. 153(4) EPC

(43) Date of publication:
**06.08.2025 Bulletin 2025/32**

(21) Application number: **23871792.0**

(22) Date of filing: **07.09.2023**

(51) International Patent Classification (IPC):
***H01M 4/62*** *(2006.01)* ***C08F 220/56*** *(2006.01)*
***C08L 101/14*** *(2006.01)* ***H01M 4/13*** *(2010.01)*
***H01M 4/139*** *(2010.01)* ***H01M 50/42*** *(2021.01)*
***H01M 50/423*** *(2021.01)* ***H01M 50/449*** *(2021.01)*
***H01M 50/46*** *(2021.01)*

(52) Cooperative Patent Classification (CPC):
**C08F 220/56; C08L 101/14; H01M 4/13; H01M 4/139; H01M 4/62; H01M 50/42; H01M 50/423; H01M 50/449; H01M 50/46;**
Y02E 60/10

(86) International application number:
**PCT/JP2023/032604**

(87) International publication number:
**WO 2024/070552 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 JP 2022158092**

(71) Applicant: **Arakawa Chemical Industries, Ltd.**
**Osaka-shi**
**Osaka 541-0046 (JP)**

(72) Inventors:
- **OZAKI, Shinji**
  **Tsukuba-shi Ibaraki 300-2611 (JP)**
- **SASAGAWA, Naoki**
  **Tsukuba-shi Ibaraki 300-2611 (JP)**

(74) Representative: **Becker, Eberhard**
**Becker Kurig & Partner**
**Patentanwälte mbB**
**Bavariastraße 7**
**80336 München (DE)**

# (54) POWER STORAGE DEVICE BINDER AQUEOUS SOLUTION, POWER STORAGE DEVICE SLURRY, POWER STORAGE DEVICE ELECTRODE, POWER STORAGE DEVICE SEPARATOR, POWER STORAGE DEVICE SEPARATOR/ELECTRODE LAMINATE, AND POWER STORAGE DEVICE

(57) Provided is a power storage device binder aqueous solution comprising: a water-soluble polymer; a (meth)acrylamide; and a (meth)acrylonitrile, wherein the water-soluble polymer includes 0.01-1 mass% of a polymerization initiator unit, and the content of the (meth) acrylamide with respect to the water-soluble polymer is 0.01-1,000 mass ppm (exclusive of 1,000 mass ppm).

EP 4 597 636 A1

**Description**

Technical Field

The disclosure relates to a power storage device binder aqueous solution, a power storage device slurry, a power storage device electrode, a power storage device separator, a power storage device separator/electrode laminate, and a power storage device.

Related Art

The applicant is investigating a method of using a water-soluble polymer as a binder of a power storage device.

Related Art Documents

Patent Documents

Patent Document 1: Japanese Patent Application Laid-Open No. 2018-006333

SUMMARY OF INVENTION

Problem to Be Solved by Invention

A problem to be solved by the present invention is to provide a power storage device binder aqueous solution for manufacturing a power storage device excellent in a pencil hardness, a breaking strength, an initial Coulombic efficiency, and a discharge capacity retention rate. Means for Solving Problem
The present inventors have found that the above problem is solved by using specific components.
The disclosure provides the following items.

(Item 1)

A power storage device binder aqueous solution including a water-soluble polymer, (meth)acrylamide, and (meth)acrylonitrile, where

- the water-soluble polymer includes 0.01 mass% to 1 mass% of a polymerization initiator unit, and
- a content of the (meth)acrylamide with respect to the water-soluble polymer is 0.01 mass ppm or more and less than 1000 mass ppm.

(Item 2)

A power storage device slurry including a water-soluble polymer, (meth)acrylamide, (meth)acrylonitrile, and water, where

- the water-soluble polymer includes 0.01 mass% to 1 mass% of a polymerization initiator unit, and
- a content of the (meth)acrylamide with respect to the water-soluble polymer is 0.01 mass ppm or more and less than 1000 mass ppm.

(Item 3)

The power storage device slurry according to the above item, including an electrode active material.

(Item 4)

The power storage device slurry according to the above item, including a non-conductive particle.

(Item 5)

A power storage device electrode having a dried product of the power storage device slurry according to any one of the above items on a current collector.

(Item 6)

A power storage device separator having a dried product of the power storage device slurry according to any one of the above items on a base material.

(Item 7)

A power storage device separator/electrode laminate having a dried product of the power storage device slurry according to any one of the above items on an active material side of an electrode.

(Item 8)

A power storage device including the power storage device electrode according to the above item.

(Item 9)

A power storage device including the power storage device separator according to the above item.

(Item 10)

A power storage device including the power storage device separator/electrode laminate according to the above item.

(Item A1)

The power storage device binder aqueous solution according to the above item or the power storage device slurry according to the above item, where the water-soluble polymer includes 1 mol% to 99.998 mol% of a (meth)acrylamide unit.

(Item A2)

The power storage device binder aqueous solution according to the above item or the power storage device slurry according to the above item, where the water-soluble polymer includes 10 mol% to 99.9 mol% of a (meth)acrylamide unit.

(Item A3)

The power storage device binder aqueous solution according to the above item or the power storage device slurry according to the above item, where the water-soluble polymer includes 20 mol% or more and less than 99.65 mol% of a (meth)acrylamide unit.

(Item A4)

The power storage device binder aqueous solution according to the above item or the power storage device slurry according to the above item, where the water-soluble polymer includes 55 mol% to 95 mol% of a (meth)acrylamide unit.

(Item A5)

The power storage device binder aqueous solution according to the above item or the power storage device slurry according to the above item, where the water-soluble polymer includes 1 mass% to 99.998 mass% of a (meth)acrylamide unit.

(Item A6)

The power storage device binder aqueous solution according to the above item or the power storage device slurry according to the above item, where the water-soluble polymer includes 10 mass% to 99.9 mass% of a (meth)acrylamide unit.

(Item A7)

The power storage device binder aqueous solution according to the above item or the power storage device slurry according to the above item, where the water-soluble polymer includes 20 mass% or more and less than 99.65 mass% of a (meth)acrylamide unit.

(Item A8)

The power storage device binder aqueous solution according to the above item or the power storage device slurry according to the above item, where the water-soluble polymer includes 55 mass% to 95 mass% of a (meth)acrylamide unit.

(Item A9)

The power storage device binder aqueous solution according to the above item or the power storage device slurry according to the above item, where the water-soluble polymer includes 0 mol% to 80 mol% of a N-substituted mono(meth) acrylamide unit.

(Item A10)

The power storage device binder aqueous solution according to the above item or the power storage device slurry according to the above item, where the water-soluble polymer includes 1 mol% to 70 mol% of a N-substituted mono(meth) acrylamide unit.

(Item A11)

The power storage device binder aqueous solution according to the above item or the power storage device slurry according to the above item, where the water-soluble polymer includes 0 mass% to 80 mass% of a N-substituted mono(meth)acrylamide unit.

(Item A12)

The power storage device binder aqueous solution according to the above item or the power storage device slurry according to the above item, where the water-soluble polymer includes 1 mass% to 70 mass% of a N-substituted mono(meth)acrylamide unit.

(Item A13)

The power storage device binder aqueous solution according to the above item or the power storage device slurry according to the above item, where the water-soluble polymer includes a N-monosubstituted mono(meth)acrylamide unit, and the N-monosubstituted mono(meth)acrylamide is represented by a structural formula below.

[Chemical Formula m1]

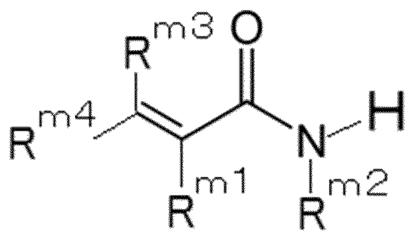

($R^{m1}$ represents a hydrogen atom or a methyl group.
$R^{m2}$ represents a substituted or unsubstituted alkyl group or an acetyl group.
$R^{m3}$ and $R^{m4}$ each independently represent a hydrogen atom, a substituted or unsubstituted alkyl group, a hydroxy group, an amino group, or an acetyl group.
The amino group is represented by $-NR^{ma}R^{mb}$.
$R^{ma}$ and $R^{mb}$ each independently represent a hydrogen atom or a substituted or unsubstituted alkyl group.

Examples of a substituent of the substituted alkyl group include a hydroxy group, an amino group, an acetyl group, a sulfonic acid group, etc.)

(Item A14)

The power storage device binder aqueous solution according to the above item or the power storage device slurry according to the above item, where the N-monosubstituted mono(meth)acrylamide is one or more selected from the group consisting of monoalkyl (meth)acrylamide, N-methylol (meth)acrylamide, hydroxyethyl (meth)acrylamide, dimethylaminopropyl (meth)acrylamide, diacetone (meth)acrylamide, dimethylaminopropyl (meth)acrylamide methyl chloride quaternary salt, and dimethylaminoethyl (meth)acrylate benzyl chloride quaternary salt.

(Item A15)

The power storage device binder aqueous solution according to the above item or the power storage device slurry according to the above item, where the water-soluble polymer includes a N-disubstituted mono(meth)acrylamide unit, and the N-disubstituted mono(meth)acrylamide is represented by a structural formula below.

[Chemical Formula d1]

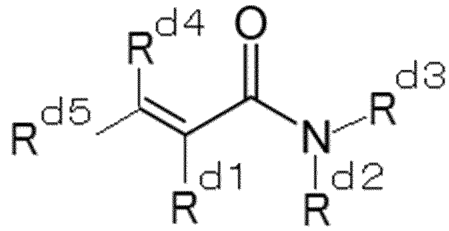

($R^{d1}$ represents a hydrogen atom or a methyl group.
$R^{d2}$ and $R^{d3}$ are each independently a substituted or unsubstituted alkyl group or an acetyl group, or $R^2$ and $R^3$ represent groups that together form a ring structure.
$R^{d4}$ and $R^{d5}$ each independently represent a hydrogen atom, a substituted or unsubstituted alkyl group, a hydroxy group, an amino group, or an acetyl group.
The amino group is represented by $-NR^{da}R^{db}$.
$R^{da}$ and $R^{db}$ each independently represent a hydrogen atom or a substituted or unsubstituted alkyl group.
Examples of a substituent of the substituted alkyl group include a hydroxy group, an amino group, an acetyl group, a sulfonic acid group, etc.)

(Item A16)

The power storage device binder aqueous solution according to the above item or the power storage device slurry according to the above item, where the N-disubstituted mono(meth)acrylamide is one or more selected from the group consisting of N,N-dimethyl(meth)acrylamide, N,N-diethyl(meth)acrylamide, N,N-dipropyl(meth)acrylamide, and (meth) acryloylmorpholine.

(Item A17)

The power storage device binder aqueous solution according to the above item or the power storage device slurry according to the above item, where the water-soluble polymer includes 0 mol% to 1.0 mol% of unsaturated hydrocarbon sulfonic acid and/or a salt unit thereof.

(Item A18)

The power storage device binder aqueous solution according to the above item or the power storage device slurry according to the above item, where the water-soluble polymer includes 0.001 mol% to 0.5 mol% of unsaturated hydrocarbon sulfonic acid and/or a salt unit thereof.

(Item A19)

The power storage device binder aqueous solution according to the above item or the power storage device slurry according to the above item, where the water-soluble polymer includes 0.001 mol% to 0.1 mol% of unsaturated hydrocarbon sulfonic acid and/or a salt unit thereof.

(Item A20)

The power storage device binder aqueous solution according to the above item or the power storage device slurry according to the above item, where the water-soluble polymer includes 0 mass% to 1.0 mass% of unsaturated hydrocarbon sulfonic acid and/or a salt unit thereof.

(Item A21)

The power storage device binder aqueous solution according to the above item or the power storage device slurry according to the above item, where the water-soluble polymer includes 0.001 mass% to 0.5 mass% of unsaturated hydrocarbon sulfonic acid and/or a salt unit thereof.

(Item A22)

The power storage device binder aqueous solution according to the above item or the power storage device slurry according to the above item, where the water-soluble polymer includes 0.001 mass% to 0.1 mass% of unsaturated hydrocarbon sulfonic acid and/or a salt unit thereof.

(Item A23)

The power storage device binder aqueous solution according to the above item or the power storage device slurry according to the above item, where the unsaturated hydrocarbon sulfonic acid or the salt thereof is one or more selected from the group consisting of (meth)allylsulfonic acid and sodium (meth)allylsulfonate.

(Item A24)

The power storage device binder aqueous solution according to the above item or the power storage device slurry according to the above item, where the water-soluble polymer includes 0 mol% to 70 mol% of unsaturated carboxylic acid and/or a salt unit thereof.

(Item A25)

The power storage device binder aqueous solution according to the above item or the power storage device slurry according to the above item, where the water-soluble polymer includes 2 mol% to 40 mol% of unsaturated carboxylic acid and/or a salt unit thereof.

(Item A26)

The power storage device binder aqueous solution according to the above item or the power storage device slurry according to the above item, where the water-soluble polymer includes 0 mass% to 70 mass% of unsaturated carboxylic acid and/or a salt unit thereof.

(Item A27)

The power storage device binder aqueous solution according to the above item or the power storage device slurry according to the above item, where the water-soluble polymer includes 2 mass% to 40 mass% of an unsaturated carboxylic acid and/or a salt unit thereof.

(Item A28)

The power storage device binder aqueous solution according to the above item or the power storage device slurry according to the above item, where the unsaturated carboxylic acid and/or the salt thereof is one or more selected from the

group consisting of (meth)acrylic acid, sodium (meth)acrylate, lithium (meth)acrylate, calcium (meth)acrylate, and ammonium (meth)acrylate.

(Item A29)

The power storage device binder aqueous solution according to the above item or the power storage device slurry according to the above item, where the water-soluble polymer includes 0 mol% to 50 mol% of an α,β-unsaturated nitrile unit.

(Item A30)

The power storage device binder aqueous solution according to the above item or the power storage device slurry according to the above item, where the water-soluble polymer includes 10 mol% to 40 mol% of an α,β-unsaturated nitrile unit.

(Item A31)

The power storage device binder aqueous solution according to the above item or the power storage device slurry according to the above item, where the water-soluble polymer includes 0 mass% to 50 mass% of an α,β-unsaturated nitrile unit.

(Item A32)

The power storage device binder aqueous solution according to the above item or the power storage device slurry according to the above item, where the water-soluble polymer includes 10 mass% to 40 mass% of an α,β-unsaturated nitrile unit.

(Item A33)

The power storage device binder aqueous solution according to the above item or the power storage device slurry according to the above item, where the α,β-unsaturated nitrile is (meth)acrylonitrile.

(Item A34)

The power storage device binder aqueous solution according to the above item or the power storage device slurry according to the above item, where the water-soluble polymer includes 0 mol% to 40 mol% of an alkoxyalkyl (meth)acrylate unit.

(Item A34)

The power storage device binder aqueous solution according to the above item or the power storage device slurry according to the above item, where the water-soluble polymer includes 0 mass% to 60 mass% of an alkoxyalkyl (meth) acrylate unit.

(Item A35)

The power storage device binder aqueous solution according to the above item or the power storage device slurry according to the above item, where the alkoxyalkyl (meth)acrylate is 2-methoxyethyl (meth)acrylate.

(Item A36)

The power storage device binder aqueous solution according to the above item or the power storage device slurry according to the above item, where the water-soluble polymer includes 0 mol% to 80 mol% of a hydroxyl group-containing monomer unit.

(Item A37)

The power storage device binder aqueous solution according to the above item or the power storage device slurry

according to the above item, where the water-soluble polymer includes 5 mol% to 50 mol% of a hydroxyl group-containing monomer unit.

(Item A38)

The power storage device binder aqueous solution according to the above item or the power storage device slurry according to the above item, where the water-soluble polymer includes 20 mol% to 40 mol% of a hydroxyl group-containing monomer unit.

(Item A39)

The power storage device binder aqueous solution according to the above item or the power storage device slurry according to the above item, where the water-soluble polymer includes 0 mass% to 85 mass% of a hydroxyl group-containing monomer unit.

(Item A40)

The power storage device binder aqueous solution according to the above item or the power storage device slurry according to the above item, where the water-soluble polymer includes 10 mass% to 70 mass% of a hydroxyl group-containing monomer unit.

(Item A41)

The power storage device binder aqueous solution according to the above item or the power storage device slurry according to the above item, where the water-soluble polymer includes 25 mass% to 45 mass% of a hydroxyl group-containing monomer unit.

(Item A42)

The power storage device binder aqueous solution according to the above item or the power storage device slurry according to the above item, where the hydroxyl group-containing monomer is one or more selected from the group consisting of 2-hydroxyethyl (meth)acrylate and 2-hydroxyethyl vinyl ether.
In addition to the explicitly stated combinations, one or more of the above-described features may be further combined and provided.

Effects of Invention

By using the power storage device binder aqueous solution of the disclosure, a power storage device excellent in a pencil hardness, a breaking strength, an initial Coulombic efficiency, and a discharge capacity retention rate can be manufactured.

EMBODIMENTS FOR IMPLEMENTING INVENTION

Throughout the disclosure, ranges of numerical values of various physical property values, content amounts, etc. may be appropriately set (e.g., selected from values described in each item below). Specifically, in the case where A3, A2, and A1 (where A3 > A2 > A1) are illustrated as a numerical value $\alpha$, examples of the range of the numerical value $\alpha$ include A3 or less, A2 or less, less than A3, less than A2, A1 or more, A2 or more, greater than A1, greater than A2, A1 to A2 (A1 or more and A2 or less), A1 to A3, A2 to A3, A1 or more and less than A3, A1 or more and less than A2, A2 or more and less than A3, greater than A1 and less than A3, greater than A1 and less than A2, greater than A2 and less than A3, greater than A1 and A3 or less, greater than A1 and A2 or less, greater than A2 and A3 or less, etc.
As long as the problem to be solved by the present invention is resolved, components, conditions, numerical values, etc. are not limited to those described in the specification.
"$\alpha\beta$ amount (A/B)" refers to $\beta$ amount ($\alpha$) of A with respect to 100$\alpha$% of B. $\alpha$ may be, for example, mass%, mol%, parts by mass, etc. $\beta$ amount may be, for example, a content amount, a usage amount, etc.
"$\gamma$ ratio (A/B)" refers to $\gamma$ ratio calculated according to formula "A $\div$ B". $\gamma$ ratio may be, for example, a mass ratio, a molar ratio, etc.
In the disclosure, "non-volatile content" refers to a total mass of components other than organic solvents and water. In an embodiment, the non-volatile content of a target object A is defined as a total mass of components remaining at

a time point at which 1 g of the target object A is heated at 105°C until a constant mass is reached.

"(Meth)acrylic" refers to "at least one selected from the group consisting of acrylic and methacrylic". "(Meth) acrylate" refers to "at least one selected from the group consisting of acrylate and methacrylate". "(Meth)acryloyl" refers to "at least one selected from the group consisting of acryloyl and methacryloyl".

Examples of an alkyl group include linear alkyl groups, branched alkyl groups, cycloalkyl groups, etc.

Examples of linear alkyl groups include methyl group, ethyl group, n-propyl group, n-butyl group, n-pentyl group, n-hexyl group, n-heptyl group, n-octyl group, n-nonyl group, n-decamethyl group, etc.

"Branched alkyl group" refers to a group without a cyclic structure, in which at least one hydrogen atom of a linear alkyl group is substituted by an alkyl group.

Examples of branched alkyl groups include i-propyl group, diethylpentyl group, trimethylbutyl group, trimethylpentyl group, trimethylhexyl group, etc.

Examples of cycloalkyl groups include monocyclic cycloalkyl groups, crosslinked cycloalkyl groups, condensed cycloalkyl groups, etc. A group in which at least one hydrogen atom of a cycloalkyl group is substituted by an alkyl group is also taken as a cycloalkyl group.

"Monocyclic" refers to a cyclic structure formed by covalent bonding of carbons without a crosslinked structure therein. "Condensed" refers to a cyclic structure in which two or more monocycles share two atoms (i.e., sharing (condensing) only one edge of each ring with each other). "Crosslinked" refers to a cyclic structure in which two or more monocycles share three or more atoms.

Examples of monocyclic cycloalkyl groups include cyclopentyl group, cyclohexyl group, cycloheptyl group, cyclodecyl group, 3,5,5-trimethylcyclohexyl group, etc.

Examples of crosslinked cycloalkyl groups include tricyclodecyl group, adamantyl group, norbornyl group, etc.

The alkyl group also includes groups that combine linear alkyl groups, branched alkyl groups, and cycloalkyl groups. Examples of the combined groups include cycloalkylalkyl group and the like.

Examples of salts include inorganic salts, organic salts, etc.

"Inorganic salt" refers to a salt in which the cation part is a metal cation.

Examples of inorganic salts include sodium salts, lithium salts, calcium salts, etc.

Examples of organic salts include ammonium salts, amine salts, etc.

[Power storage device binder aqueous solution: aqueous solution]

The disclosure relates to a power storage device binder aqueous solution, where

- the power storage device binder aqueous solution includes a water-soluble polymer, (meth)acrylamide, and (meth) acrylonitrile,
- the water-soluble polymer includes 0.01 mass% to 1 mass% of a polymerization initiator unit, and
- a content of the (meth)acrylamide with respect to the water-soluble polymer is 0.01 mass ppm or more and less than 1000 mass ppm.

<Water-soluble polymer: polymer>

The water-soluble polymer may be used alone or as a combination of two or more types.

"Water-soluble" means that when 0.5 g of the compound is dissolved in 100 g of water at 25°C, the water-insoluble portion is less than 0.5 mass% (less than 2.5 mg).

Examples of the water-insoluble portion include less than 0.5 mass%, less than 0.4 mass%, less than 0.3 mass%, less than 0.2 mass%, less than 0.1 mass%, 0 mass%, etc.

((Meth)acrylamide)

The (meth)acrylamide may be used alone or as a combination of two or more types.

Examples of a mol% content ((meth)acrylamide unit/water-soluble polymer) include 99.998 mol%, 99.99 mol%, 95 mol%, 90 mol%, 85 mol%, 80 mol%, 75 mol%, 70 mol%, 65 mol%, 60 mol%, 55 mol%, 50 mol%, 45 mol%, 40 mol%, 35 mol%, 30 mol%, 25 mol%, 20 mol%, 15 mol%, 10 mol%, 9 mol%, 5 mol%, 4 mol%, 2 mol%, 1 mol%, etc. In an embodiment, the content is preferably 1 mol% to 99.998 mol%, more preferably 10 mol% to 99.9 mol%, even more preferably 20 mol% or more and less than 99.65 mol%, and particularly preferably 55 mol% to 95 mol%. Examples of reasons for the preference include improved dispersibility, improved storage stability, etc.

Examples of a mass% content ((meth)acrylamide unit/water-soluble polymer) include 99.998 mass%, 99.99 mass%, 95 mass%, 90 mass%, 85 mass%, 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 15 mass%, 10 mass%, 9 mass%, 5 mass%,

4 mass%, 2 mass%, 1 mass%, etc. In an embodiment, the content is preferably 1 mass% to 99.998 mass%, more preferably 10 mass% to 99.9 mass%, even more preferably 20 mass% or more and less than 99 mass%, and particularly preferably 55 mass% to 95 mass%. Examples of reasons for the preference include improved dispersibility, improved storage stability, etc.

(N-substituted mono(meth)acrylamide)

In an embodiment, the water-soluble polymer may optionally include a N-substituted mono(meth)acrylamide unit. The N-substituted mono(meth)acrylamide may be used alone or as a combination of two or more types.
"N-substituted mono(meth)acrylamide" refers to a compound having one (meth)acrylamide group in which one or more hydrogen atoms on nitrogen are substituted with a group other than hydrogen.

[Chemical Formula 1]

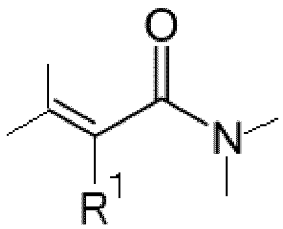

(In the formula, $R^1$ is a hydrogen atom or a methyl group.)
Examples of N-substituted mono(meth)acrylamide include N-monosubstituted mono(meth)acrylamide, N,N-disubstituted mono(meth)acrylamide, etc.
In an embodiment, the N-monosubstituted mono(meth)acrylamide is represented by the following structural formula.

[Chemical Formula m1]

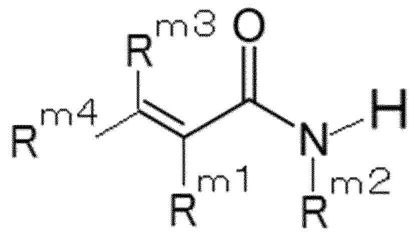

($R^{m1}$ represents a hydrogen atom or a methyl group.
$R^{m2}$ represents a substituted or unsubstituted alkyl group or an acetyl group.
$R^{m3}$ and $R^{m4}$ each independently represent a hydrogen atom, a substituted or unsubstituted alkyl group, a hydroxy group, an amino group, or an acetyl group.
The amino group is represented by $-NR^{ma}R^{mb}$.
$R^{ma}$ and $R^{mb}$ each independently represent a hydrogen atom or a substituted or unsubstituted alkyl group.
Examples of substituents of the substituted alkyl group include a hydroxy group, an amino group, an acetyl group, a sulfonic acid group, etc.)

Examples of N-monosubstituted mono(meth)acrylamide include monoalkyl (meth)acrylamide, N-methylol (meth)acrylamide, hydroxyethyl (meth)acrylamide, dimethylaminopropyl (meth)acrylamide, diacetone (meth)acrylamide, methyl chloride quaternary salt of dimethylaminopropyl (meth)acrylamide, benzyl chloride quaternary salt of dimethylaminoethyl (meth)acrylate, etc.
"Monoalkyl (meth)acrylamide" refers to a compound in which one hydrogen atom directly bonded to the nitrogen atom of (meth)acrylamide is substituted with an unsubstituted alkyl group.
Examples of monoalkyl (meth)acrylamide include N-methyl (meth)acrylamide, N-ethyl (meth)acrylamide, N-propyl (meth)acrylamide, etc.
In an embodiment, the N,N-disubstituted mono(meth)acrylamide is represented by the following structural

formula.

[Chemical Formula d1]

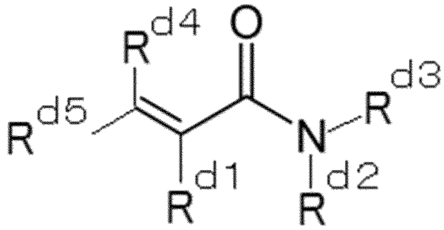

($R^{d1}$ represents a hydrogen atom or a methyl group.
$R^{d2}$ and $R^{d3}$ are each independently a substituted or unsubstituted alkyl group or an acetyl group, or $R^2$ and $R^3$ represent groups that together form a ring structure.
$R^{d4}$ and $R^{d5}$ each independently represent a hydrogen atom, a substituted or unsubstituted alkyl group, a hydroxy group, an amino group, or an acetyl group.
The amino group is represented by $-NR^{da}R^{db}$.
$R^{da}$ and $R^{db}$ each independently represent a hydrogen atom or a substituted or unsubstituted alkyl group.
Examples of substituents of the substituted alkyl group include a hydroxy group, an amino group, an acetyl group, a sulfonic acid group, etc.)

Examples of the N-disubstituted mono(meth)acrylamide include dialkyl(meth)acrylamide, (meth)acryloylmorpholine, etc.

"Dialkyl(meth)acrylamide" refers to a compound in which two hydrogen atoms directly bonded to the nitrogen atom of (meth)acrylamide are substituted with unsubstituted alkyl groups.

Examples of dialkyl(meth)acrylamide include N,N-dimethyl(meth)acrylamide, N,N-diethyl(meth)acrylamide, N,N-dipropyl(meth)acrylamide, etc.

Examples of a mol% content (N-substituted mono(meth)acrylamide unit/water-soluble polymer) include 80 mol%, 75 mol%, 70 mol%, 65 mol%, 60 mol%, 55 mol%, 50 mol%, 45 mol%, 40 mol%, 35 mol%, 30 mol%, 25 mol%, 20 mol%, 19 mol%, 17 mol%, 15 mol%, 13 mol%, 11 mol%, 10 mol%, 9 mol%, 7 mol%, 5 mol%, 4 mol%, 2 mol%, 1 mol%, 0.9 mol%, 0.7 mol%, 0.5 mol%, 0.45 mol%, 0.4 mol%, 0.35 mol%, 0.3 mol%, 0.25 mol%, 0.20 mol%, 0.15 mol%, 0.10 mol%, 0.08 mol%, 0.06 mol%, 0.05 mol%, 0.03 mol%, 0.01 mol%, 0.009 mol%, 0.007 mol%, 0.005 mol%, 0.003 mol%, 0.001 mol%, 0 mol%, etc. In an embodiment, the content is preferably 0 mol% to 80 mol%, more preferably 1 mol% to 60 mol%, even more preferably 0.001 mol% or more and less than 5 mol%, and particularly preferably 0.001 to 1 mol%.

Examples of a mass% content (N-substituted mono(meth)acrylamide unit/water-soluble polymer) include 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 19 mass%, 17 mass%, 15 mass%, 13 mass%, 11 mass%, 10 mass%, 9 mass%, 7 mass%, 5 mass%, 4 mass%, 2 mass%, 1 mass%, 0.9 mass%, 0.7 mass%, 0.5 mass%, 0.45 mass%, 0.4 mass%, 0.35 mass%, 0.3 mass%, 0.25 mass%, 0.20 mass%, 0.15 mass%, 0.10 mass%, 0.08 mass%, 0.06 mass%, 0.05 mass%, 0.03 mass%, 0.01 mass%, 0.009 mass%, 0.007 mass%, 0.005 mass%, 0.003 mass%, 0.001 mass%, 0 mass%, etc. In an embodiment, the content is preferably 0 mass% to 80 mass%, more preferably 1 mass% to 60 mass%, even more preferably 0.001 mass% or more and less than 5 mass%, and particularly preferably 0.001 mass% to 1 mass%.

Examples of a mol% content (N-monosubstituted mono(meth)acrylamide unit/water-soluble polymer) include 0 mol%, 75 mol%, 70 mol%, 65 mol%, 60 mol%, 55 mol%, 50 mol%, 45 mol%, 40 mol%, 35 mol%, 30 mol%, 25 mol%, 20 mol%, 19 mol%, 17 mol%, 15 mol%, 13 mol%, 11 mol%, 10 mol%, 9 mol%, 7 mol%, 5 mol%, 4 mol%, 2 mol%, 1 mol%, 0.9 mol%, 0.7 mol%, 0.5 mol%, 0.45 mol%, 0.4 mol%, 0.35 mol%, 0.3 mol%, 0.25 mol%, 0.20 mol%, 0.15 mol%, 0.10 mol%, 0.08 mol%, 0.06 mol%, 0.05 mol%, 0.03 mol%, 0.01 mol%, 0.009 mol%, 0.007 mol%, 0.005 mol%, 0.003 mol%, 0.001 mol%, 0 mol%, etc. In an embodiment, the content is preferably 0 mol% to 80 mol%, more preferably 0 mol% to 20 mol%, even more preferably 0.001 mol% or more and less than 5 mol%, and particularly preferably 0.001 to 1 mol%.

Examples of a mass% content (N-monosubstituted mono(meth)acrylamide unit/water-soluble polymer) include 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 19 mass%, 17 mass%, 15 mass%, 13 mass%, 11 mass%, 10 mass%, 9 mass%, 7 mass%, 5 mass%, 4 mass%, 2 mass%, 1 mass%, 0.9 mass%, 0.7 mass%, 0.5 mass%, 0.45 mass%, 0.4 mass%, 0.35 mass%, 0.3 mass%, 0.25 mass%, 0.20 mass%, 0.15 mass%, 0.10 mass%, 0.08 mass%, 0.06 mass%, 0.05 mass%, 0.03 mass%, 0.01 mass%, 0.009 mass%, 0.007 mass%, 0.005 mass%, 0.003 mass%, 0.001 mass%, 0 mass%, etc. In an embodiment, the content is preferably 0 mass% to 80 mass%, more preferably 0 mass% to 20 mass%, even more preferably 0.001 mass%

or more and less than 5 mass%, and particularly preferably 0.001 mass% to 1 mass%.

Examples of a mol% content (N-disubstituted mono(meth)acrylamide unit/water-soluble polymer) include 0 mol%, 75 mol%, 70 mol%, 65 mol%, 60 mol%, 55 mol%, 50 mol%, 45 mol%, 40 mol%, 35 mol%, 30 mol%, 25 mol%, 20 mol%, 19 mol%, 17 mol%, 15 mol%, 13 mol%, 11 mol%, 10 mol%, 9 mol%, 7 mol%, 5 mol%, 4 mol%, 2 mol%, 1 mol%, 0.9 mol%, 0.7 mol%, 0.5 mol%, 0.45 mol%, 0.4 mol%, 0.35 mol%, 0.3 mol%, 0.25 mol%, 0.20 mol%, 0.15 mol%, 0.10 mol%, 0.08 mol%, 0.06 mol%, 0.05 mol%, 0.03 mol%, 0.01 mol%, 0.009 mol%, 0.007 mol%, 0.005 mol%, 0.003 mol%, 0.001 mol%, 0 mol%, etc. In an embodiment, the content is preferably 0 mol% to 80 mol%, more preferably 0 mol% to 20 mol%, even more preferably 0.001 mol% or more and less than 5 mol%, and particularly preferably 0.001 to 1 mol%.

Examples of a mass% content (N-disubstituted mono(meth)acrylamide unit/water-soluble polymer) include 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 19 mass%, 17 mass%, 15 mass%, 13 mass%, 11 mass%, 10 mass%, 9 mass%, 7 mass%, 5 mass%, 4 mass%, 2 mass%, 1 mass%, 0.9 mass%, 0.7 mass%, 0.5 mass%, 0.45 mass%, 0.4 mass%, 0.35 mass%, 0.3 mass%, 0.25 mass%, 0.20 mass%, 0.15 mass%, 0.10 mass%, 0.08 mass%, 0.06 mass%, 0.05 mass%, 0.03 mass%, 0.01 mass%, 0.009 mass%, 0.007 mass%, 0.005 mass%, 0.003 mass%, 0.001 mass%, 0 mass%, etc. In an embodiment, the content is preferably 0 mass% to 80 mass%, more preferably 0 mass% to 20 mass%, even more preferably 0.001 mass% or more and less than 5 mass%, and particularly preferably 0.001 mass% to 1 mass%.

(Unsaturated hydrocarbon sulfonic acid and/or salt thereof)

In an embodiment, the water-soluble polymer may optionally include unsaturated hydrocarbon sulfonic acid and/or a salt unit thereof. The unsaturated hydrocarbon sulfonic acid and/or the salt thereof may be used alone or as a combination of two or more types.

"Unsaturated hydrocarbon sulfonic acid" refers to a sulfonic acid in which the structure other than the sulfonic acid (salt) group is composed only of carbon atoms and hydrogen atoms.

Examples of unsaturated hydrocarbon sulfonic acid or a salt thereof include vinylsulfonic acid, styrenesulfonic acid, (meth)allylsulfonic acid, sodium vinylsulfonate, sodium styrenesulfonate, sodium (meth)allylsulfonate, etc.

Examples of a mol% content (unsaturated hydrocarbon sulfonic acid and/or salt unit thereof /water-soluble polymer) include 1.0 mol%, 0.95 mol%, 0.9 mol%, 0.85 mol%, 0.8 mol%, 0.75 mol%, 0.7 mol%, 0.65 mol%, 0.6 mol%, 0.55 mol%, 0.5 mol%, 0.45 mol%, 0.4 mol%, 0.35 mol%, 0.3 mol%, 0.25 mol%, 0.20 mol%, 0.15 mol%, 0.10 mol%, 0.08 mol%, 0.06 mol%, 0.05 mol%, 0.03 mol%, 0.01 mol%, 0.009 mol%, 0.007 mol%, 0.005 mol%, 0.003 mol%, 0.001 mol%, 0 mol%, etc. In an embodiment, the content is preferably 0 mol% to 1.0 mol%, more preferably 0.001 mol% to 0.5 mol%, even more preferably 0.001 mol% to 0.1 mol%, and particularly preferably less than 0.01 mol%. Examples of reasons for the preference include improved pencil hardness, improved breaking strength, etc.

Examples of a mass% content (unsaturated hydrocarbon sulfonic acid and/or salt unit thereof/water-soluble polymer) include 1.0 mass%, 0.95 mass%, 0.9 mass%, 0.85 mass%, 0.8 mass%, 0.75 mass%, 0.7 mass%, 0.65 mass%, 0.6 mass%, 0.55 mass%, 0.5 mass%, 0.45 mass%, 0.4 mass%, 0.35 mass%, 0.3 mass%, 0.25 mass%, 0.20 mass%, 0.15 mass%, 0.10 mass%, 0.08 mass%, 0.06 mass%, 0.05 mass%, 0.03 mass%, 0.01 mass%, 0.009 mass%, 0.007 mass%, 0.005 mass%, 0.003 mass%, 0.001 mass%, 0 mass%, etc. In an embodiment, the content is preferably 0 mass% to 1.0 mass%, more preferably 0.001 mass% to 0.5 mass%, and even more preferably 0.001 mass% to 0.1 mass%. Examples of reasons for the preference include improved pencil hardness, improved breaking strength, etc.

Examples of a neutralization rate [substance amount of unsaturated hydrocarbon sulfonic acid salt unit/(substance amount of unsaturated hydrocarbon sulfonic acid salt unit + substance amount of unsaturated hydrocarbon sulfonic acid unit)] include 100%, 95%, 90%, 85%, 80%, 75%, 70%, 65%, 60%, 55%, 50%, 45%, 40%, 35%, 30%, 25%, 20%, 15%, 10%, etc. In an embodiment, the neutralization rate is preferably 10% to 100%.

(Multifunctional monomer)

In an embodiment, the water-soluble polymer may optionally include a multifunctional monomer unit. The multifunctional monomer may be used alone or as a combination of two or more types.

"Multifunctional monomer" refers to a monomer having two or more ethylenically unsaturated double bonds.

Examples of multifunctional monomer include multifunctional (meth)acrylamide compound, tri(allyl group)-containing monomer, tri((meth)acryloyl group)-containing triazine, etc.

"Multifunctional (meth)acrylamide compound" refers to a compound having two or more (meth)acrylamide groups.

[Chemical Formula 1]

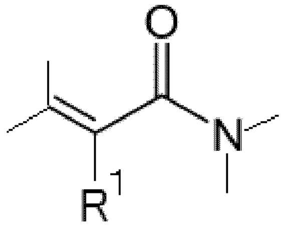

(In the formula, $R^1$ is a hydrogen atom or a methyl group.)

Examples of multifunctional (meth)acrylamide compound include N,N'-methylenebis(meth)acrylamide, N,N'-ethylenebis(meth)acrylamide, N-[tris(3-(meth)acrylamidopropoxymethyl)methyl](meth)acrylamide, N,N-bis(2-(meth)acrylamidoethyl)(meth)acrylamide, N,N-[oxybis(2,1-ethanediyloxy-3,1-propanediyl)]bis(meth)acrylamide, N,N-1,2-ethanediylbis{N-[2-((meth)acryloylamino)ethyl](meth)acrylamide}, etc.

Examples of tri(allyl group)-containing monomer include triallyl isocyanurate, triallyl trimellitate, triallylamine, triallyl (meth)acrylamide, etc.

Examples of tri((meth)acryloyl group)-containing triazine include 1,3,5-tri((meth)acryloyl)-1,3,5-triazine, 1,3,5-tri((meth)acryloyl)hexahydro-1,3,5-triazine, etc.

Examples of a mol% content (multifunctional monomer unit/water-soluble polymer) include 10 mol%, 9 mol%, 8 mol%, 7 mol%, 6 mol%, 5 mol%, 4 mol%, 3 mol%, 2 mol%, 1 mol%, 0.9 mol%, 0.7 mol%, 0.5 mol%, 0.3 mol%, 0.1 mol%, 0.05 mol%, 0 mol%, etc. In an embodiment, the content is preferably 0 to 10 mol%, and more preferably 0.05 to 2 mol%.

Examples of a mass% content (multifunctional monomer unit/water-soluble polymer) include 10 mass%, 9 mass%, 8 mass%, 7 mass%, 6 mass%, 5 mass%, 4 mass%, 3 mass%, 2 mass%, 1 mass%, 0.9 mass%, 0.7 mass%, 0.5 mass%, 0.3 mass%, 0.1 mass%, 0.05 mass%, 0 mass%, etc. In an embodiment, the content is preferably 0 mass% to 10 mass%, and more preferably 0.05 mass% to 2 mass%.

(Unsaturated carboxylic acid and/or salt thereof)

In an embodiment, the water-soluble polymer may optionally include an unsaturated carboxylic acid and/or a salt unit thereof. The unsaturated carboxylic acid and/or the salt thereof may be used alone or as a combination of two or more types.

Examples of unsaturated carboxylic acid or a salt thereof include (meth)acrylic acid, crotonic acid, maleic acid, fumaric acid, itaconic acid, sodium (meth)acrylate, sodium crotonate, sodium maleate, sodium fumarate, sodium itaconate, lithium (meth)acrylate, lithium crotonate, lithium maleate, lithium fumarate, lithium itaconate, calcium (meth)acrylate, calcium crotonate, calcium maleate, calcium fumarate, calcium itaconate, ammonium (meth)acrylate, ammonium crotonate, ammonium maleate, ammonium fumarate, ammonium itaconate, etc.

Examples of a mol% content (unsaturated carboxylic acid and/or salt unit thereof/water-soluble polymer) include 70 mol%, 65 mol%, 60 mol%, 55 mol%, 50 mol%, 45 mol%, 40 mol%, 35 mol%, 30 mol%, 25 mol%, 20 mol%, 15 mol%, 10 mol%, 5 mol%, 4 mol%, 2 mol%, 1 mol%, 0 mol%, etc. In an embodiment, the content is preferably 0 mol% to 70 mol%, and more preferably 2 mol% to 40 mol%.

Examples of a mass% content (unsaturated carboxylic acid and/or salt unit thereof/water-soluble polymer) include 70 mass%, 65 mass%, 60 mass%, 55 mass%, 50 mass%, 45 mass%, 40 mass%, 35 mass%, 30 mass%, 29 mass%, 25 mass%, 20 mass%, 15 mass%, 10 mass%, 9 mass%, 5 mass%, 4 mass%, 2 mass%, 1 mass%, 0 mass%, etc. In an embodiment, the content is preferably 0 mass% to 70 mass%, more preferably 0 mass% to 40 mass%, and even more preferably 2 mass% to 40 mass%.

Examples of a neutralization rate [substance amount of unsaturated carboxylic acid salt unit/(substance amount of unsaturated carboxylic acid salt unit + substance amount of unsaturated carboxylic acid unit)] include 100%, 95%, 90%, 85%, 80%, 75%, 70%, 65%, 60%, 55%, 50%, 45%, 40%, 35%, 30%, 25%, 20%, 15%, 10%, etc. In an embodiment, the neutralization rate is preferably 10% to 100%.

($\alpha$,$\beta$-unsaturated nitrile)

In an embodiment, the water-soluble polymer may optionally include an $\alpha$,$\beta$-unsaturated nitrile unit. The $\alpha$,$\beta$-unsaturated nitrile may be used alone or as a combination of two or more types.

Examples of $\alpha$,$\beta$-unsaturated nitrile include (meth)acrylonitrile, $\alpha$-chloro(meth)acrylonitrile, $\alpha$-ethyl(meth)acrylonitrile, vinylidene cyanide, etc.

Examples of a mol% content (α,β-unsaturated nitrile unit/water-soluble polymer) include 50 mol%, 45 mol%, 40 mol%, 35 mol%, 30 mol%, 25 mol%, 20 mol%, 15 mol%, 10 mol%, 9 mol%, 5 mol%, 4 mol%, 2 mol%, 1 mol%, 0 mol%, etc. In an embodiment, the content is preferably 0 mol% to 50 mol%, more preferably 0 mol% to 40 mol%, and even more preferably 10 mol% to 40 mol%.
Examples of a mass% content (α,β-unsaturated nitrile unit/water-soluble polymer) include 50 mass%, 45 mass%, 40 mass%, 35 mass%, 30 mass%, 25 mass%, 20 mass%, 15 mass%, 10 mass%, 9 mass%, 5 mass%, 4 mass%, 2 mass%, 1 mass%, 0 mass%, etc. In an embodiment, the content is preferably 0 mass% to 50 mass%, more preferably 0 mass% to 30 mass%, and even more preferably 5 mass% to 30 mass%.

(Alkoxyalkyl (meth)acrylate unit)

In an embodiment, the water-soluble polymer may optionally include an alkoxyalkyl (meth)acrylate unit. The alkoxyalkyl (meth)acrylate may be used alone or as a combination of two or more types.
Examples of alkoxyalkyl (meth)acrylate include methoxymethyl (meth)acrylate, 2-methoxyethyl (meth)acrylate, 1-methoxyethyl (meth)acrylate, 3-methoxypropyl (meth)acrylate, 2-methoxypropyl (meth)acrylate, 1-methoxypropyl (meth)acrylate, 4-methoxybutyl (meth)acrylate, 3-methoxybutyl (meth)acrylate, 2-methoxybutyl (meth)acrylate, 1-methoxybutyl (meth)acrylate, ethoxymethyl (meth)acrylate, 2-ethoxyethyl (meth)acrylate, 1-ethoxyethyl (meth)acrylate, 3-ethoxypropyl (meth)acrylate, 2-ethoxypropyl (meth)acrylate, 1-ethoxypropyl (meth)acrylate, propoxymethyl (meth)acrylate, 2-propoxyethyl (meth)acrylate, 1-propoxyethyl (meth)acrylate, butoxymethyl (meth)acrylate, etc.
Examples of a mol% content (alkoxyalkyl (meth)acrylate unit/water-soluble polymer) include 40 mol%, 35 mol%, 30 mol%, 25 mol%, 20 mol%, 15 mol%, 10 mol%, 9 mol%, 5 mol%, 4 mol%, 2 mol%, 1 mol%, 0 mol%, etc. In an embodiment, the content is preferably 0 mol% to 40 mol%.
Examples of a mass% content (alkoxyalkyl (meth)acrylate unit/water-soluble polymer) include 60 mass%, 55 mass%, 50 mass%, 45 mass%, 40 mass%, 35 mass%, 30 mass%, 25 mass%, 20 mass%, 15 mass%, 10 mass%, 9 mass%, 5 mass%, 4 mass%, 2 mass%, 1 mass%, 0 mass%, etc. In an embodiment, the content is preferably 0 mass% to 60 mass%.

(Hydroxyl group-containing monomer)

In an embodiment, the water-soluble polymer may optionally include a hydroxyl group-containing monomer unit. The hydroxyl group-containing monomer may be used alone or as a combination of two or more types.
Examples of hydroxyl group-containing monomer include hydroxyl group-containing (meth)acrylic acid ester, hydroxyl group-containing vinyl ether, etc.
Examples of hydroxyl group-containing (meth)acrylic acid ester include hydroxyl group-containing linear (meth) acrylic acid ester, hydroxyl group-containing branched (meth)acrylic acid ester, etc.
Examples of hydroxyl group-containing linear (meth)acrylic acid ester include 2-hydroxyethyl (meth)acrylate, 3-hydroxypropyl (meth)acrylate, 4-hydroxybutyl (meth)acrylate, etc.
Examples of hydroxyl group-containing branched (meth)acrylic acid ester include 1-hydroxyethyl (meth)acrylate, 1-hydroxypropyl (meth)acrylate, 2-hydroxypropyl (meth)acrylate, 2-hydroxy-1-methylethyl (meth)acrylate, 1-hydroxy-2-methylethyl (meth)acrylate, 1-hydroxybutyl (meth)acrylate, 2-hydroxybutyl (meth)acrylate, 3-hydroxybutyl (meth) acrylate, 1-hydroxy-1-methyl-propyl (meth)acrylate, 2-hydroxy-1-methyl-propyl (meth)acrylate, 3-hydroxy-1-methyl-propyl (meth)acrylate, 1-ethyl-2-hydroxyethyl (meth)acrylate, 1-hydroxy-2-methylpropyl (meth)acrylate, 2-hydroxy-2-methyl-propyl (meth)acrylate, 3-hydroxy-2-methyl-propyl (meth)acrylate, 1,1-dimethyl-2-hydroxyethyl (meth)acrylate, etc.
Examples of hydroxyl group-containing vinyl ether include hydroxyalkyl vinyl ether, polyalkylene glycol monovinyl ether, etc.
Examples of hydroxyalkyl vinyl ether include hydroxy linear alkyl vinyl ether, hydroxy branched alkyl vinyl ether, hydroxy cycloalkyl vinyl ether, etc.
Examples of hydroxy linear alkyl vinyl ether include 2-hydroxyethyl vinyl ether, 3-hydroxypropyl vinyl ether, 4-hydroxybutyl vinyl ether, 5-hydroxypentyl vinyl ether, etc.
Examples of hydroxy branched alkyl vinyl ether include 2-hydroxypropyl vinyl ether, 2-hydroxy-2-methylpropyl vinyl ether, 4-hydroxy-2-methylbutyl vinyl ether, etc.
Examples of hydroxy cycloalkyl vinyl ether include 4-hydroxycyclopentyl vinyl ether and the like.
Examples of polyalkylene glycol monovinyl ether include polymethylene glycol monovinyl ether, polyethylene glycol monovinyl ether, polypropylene glycol monovinyl ether, etc.
Examples of polymethylene glycol monovinyl ether include dimethylene glycol monovinyl ether, trimethylene glycol monovinyl ether, tetramethylene glycol monovinyl ether, pentamethylene glycol monovinyl ether, hexamethylene glycol monovinyl ether, heptamethylene glycol monovinyl ether, octamethylene glycol monovinyl ether, nonamethylene

glycol monovinyl ether, decamethylene glycol monovinyl ether, etc.

Examples of polyethylene glycol monovinyl ether include diethylene glycol monovinyl ether, triethylene glycol monovinyl ether, tetraethylene glycol monovinyl ether, pentaethylene glycol monovinyl ether, hexaethylene glycol monovinyl ether, heptaethylene glycol monovinyl ether, octaethylene glycol monovinyl ether, nonaethylene glycol monovinyl ether, decaethylene glycol monovinyl ether, etc.

Examples of polypropylene glycol monovinyl ether include dipropylene glycol monovinyl ether, tripropylene glycol monovinyl ether, tetrapropylene glycol monovinyl ether, pentapropylene glycol monovinyl ether, hexapropylene glycol monovinyl ether, heptapropylene glycol monovinyl ether, octapropylene glycol monovinyl ether, nonapropylene glycol monovinyl ether, decapropylene glycol monovinyl ether, etc.

Examples of a mol% content (hydroxyl group-containing monomer unit/water-soluble polymer) include 80 mol%, 75 mol%, 70 mol%, 65 mol%, 60 mol%, 55 mol%, 50 mol%, 45 mol%, 40 mol%, 35 mol%, 30 mol%, 25 mol%, 20 mol%, 15 mol%, 10 mol%, 9 mol%, 5 mol%, 4 mol%, 2 mol%, 1 mol%, 0 mol%, etc. In an embodiment, the content is preferably 0 mol% to 80 mol%, more preferably 5 mol% to 50 mol%, and even more preferably 20 mol% to 40 mol%.

Examples of a mass% content (hydroxyl group-containing monomer unit/water-soluble polymer) include 85 mass%, 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 15 mass%, 10 mass%, 9 mass%, 5 mass%, 4 mass%, 2 mass%, 1 mass%, 0 mass%, etc. In an embodiment, the content is preferably 0 mass% to 85 mass%, more preferably 10 mass% to 70 mass%, and even more preferably 25 mass% to 45 mass%.

(Polymerization initiator)

The polymerization initiator may be used alone or as a combination of two or more types.

Examples of the polymerization initiator include an azo-based initiator and the like.

Examples of the azo-based initiator include 2,2'-azobis-2-amidinopropane dihydrochloride and the like.

Examples of a mol% content (polymerization initiator unit/water-soluble polymer) include 1 mol%, 0.95 mol%, 0.9 mol%, 0.85 mol%, 0.8 mol%, 0.75 mol%, 0.7 mol%, 0.65 mol%, 0.6 mol%, 0.55 mol%, 0.5 mol%, 0.45 mol%, 0.4 mol%, 0.35 mol%, 0.3 mol%, 0.25 mol%, 0.2 mol%, 0.15 mol%, 0.1 mol%, 0.07 mol%, 0.05 mol%, 0.03 mol%, 0.01 mol%, etc. In an embodiment, the content is preferably 0.01 mol% to 1 mol%.

Examples of a mass% content (polymerization initiator unit/water-soluble polymer) include 1 mass%, 0.95 mass%, 0.9 mass%, 0.85 mass%, 0.8 mass%, 0.75 mass%, 0.7 mass%, 0.65 mass%, 0.6 mass%, 0.55 mass%, 0.5 mass%, 0.45 mass%, 0.4 mass%, 0.35 mass%, 0.3 mass%, 0.25 mass%, 0.2 mass%, 0.15 mass%, 0.1 mass%, 0.07 mass%, 0.05 mass%, 0.03 mass%, 0.01 mass%, etc. In an embodiment, the content is preferably 0.01 mass% to 1 mass%.

(Monomer other than those described above: other component)

The water-soluble polymer may optionally include a monomer (other component) unit that is not any of the (meth) acrylamide, the N-substituted mono(meth)acrylamide, the unsaturated hydrocarbon sulfonic acid and/or the salt thereof, the multifunctional monomer, the unsaturated carboxylic acid and/or the salt thereof, the α,β-unsaturated nitrile, the alkoxyalkyl (meth)acrylate, and the hydroxyl group-containing monomer. The "other component" may be used alone or as a combination of two or more types.

Examples of the other component include unsaturated phosphoric acid and/or a salt thereof, alkyl (meth)acrylic acid ester, conjugated diene, aromatic vinyl compound, etc.

Examples of unsaturated phosphoric acid include vinylphosphonic acid, vinylphosphate, bis((meth)acryloxyethyl)phosphate, diphenyl-2-(meth)acryloyloxyethylphosphate, dibutyl-2-(meth)acryloyloxyethylphosphate, dioctyl-2-(meth)acryloyloxyethylphosphate, monomethyl-2-(meth)acryloyloxyethylphosphate, 3-(meth)acryloxy-2-hydroxypropanephosphoric acid, etc.

Examples of alkyl (meth)acrylic acid ester include linear alkyl (meth)acrylic acid ester, branched alkyl (meth) acrylic acid ester, alicyclic alkyl (meth)acrylic acid ester, etc.

Examples of linear alkyl (meth)acrylic acid ester include methyl (meth)acrylate, ethyl (meth)acrylate, n-propyl (meth)acrylate, n-butyl (meth)acrylate, n-amyl (meth)acrylate, hexyl (meth)acrylate, n-octyl (meth)acrylate, nonyl (meth) acrylate, decyl (meth)acrylate, etc.

Examples of branched alkyl (meth)acrylic acid ester include i-propyl (meth)acrylate, i-butyl (meth)acrylate, i-amyl (meth)acrylate, 2-ethylhexyl (meth)acrylate, etc.

Examples of alicyclic alkyl (meth)acrylic acid ester include cyclohexyl (meth)acrylate and the like.

Examples of conjugated diene include 1,3-butadiene, 2-methyl-1,3-butadiene, 2,3-dimethyl-1,3-butadiene, 2-chloro-1,3-butadiene, substituted linear conjugated pentadiene, substituted and side-chain conjugated hexadiene, etc.

Examples of aromatic vinyl compound include styrene, α-methylstyrene, p-methylstyrene, vinyltoluene, chlorostyrene, divinylbenzene, etc.

Examples of a mass% content (other component unit/water-soluble polymer) include less than 10 mass%, less than 9 mass%, less than 7 mass%, less than 5 mass%, less than 4 mass%, less than 2 mass%, less than 1 mass%, less than 0.9 mass%, less than 0.7 mass%, less than 0.5 mass%, less than 0.4 mass%, less than 0.2 mass%, less than 0.1 mass%, 0 mass%, etc. In an embodiment, the content is preferably less than 10 mass%, more preferably less than 5 mass%, even more preferably less than 1 mass%, and particularly preferably 0 mass%.

Examples of a mol% content (other component unit/water-soluble polymer) include less than 10 mol%, less than 9 mol%, less than 7 mol%, less than 5 mol%, less than 4 mol%, less than 3 mol%, less than 2 mol%, less than 1 mol%, and 0 mol%. In an embodiment, the content is preferably less than 10 mol%, more preferably less than 5 mol%, even more preferably less than 1 mol%, and particularly preferably 0 mol%.

<Manufacturing method (water-soluble polymer)>

In an embodiment, a manufacturing method (water-soluble polymer) includes a pre-polymerization process and a post-polymerization process.

(Pre-polymerization process)

"Pre-polymerization process" refers to a process of manufacturing (polymerizing) the water-soluble polymer.

Examples of a mass% usage amount (radical polymerization initiator/monomer group) in the pre-polymerization process include 1.0 mass%, 0.9 mass%, 0.8 mass%, 0.7 mass%, 0.6 mass%, 0.5 mass%, 0.4 mass%, 0.3 mass%, 0.2 mass%, 0.1 mass%, 0.05 mass%, etc. In an embodiment, the usage amount in the pre-polymerization process is preferably 0.05 mass% to 1.0 mass%.

Examples of a pre-polymerization temperature include 100°C, 95°C, 90°C, 85°C, 80°C, 75°C, 70°C, 65°C, 60°C, 55°C, 50°C, etc. In an embodiment, the pre-polymerization temperature is preferably 50°C to 100°C.

Examples of a pre-polymerization time include 10 hours, 9 hours, 8 hours, 7 hours, 6 hours, 5 hours, 4 hours, 3 hours, 2 hours, 1.5 hours, 1 hour, etc. In an embodiment, the pre-polymerization time is preferably 1 hour to 10 hours, and more preferably 2 hours to 10 hours.

(Post-polymerization process)

"Post-polymerization process" refers to a process of adding more polymerization initiator to cause reaction after the pre-polymerization process.

The post-polymerization process may be performed once or twice or more times.

Examples of a mass% usage amount (radical polymerization initiator/monomer group) in the post-polymerization process include 1.0 mass%, 0.9 mass%, 0.8 mass%, 0.7 mass%, 0.6 mass%, 0.5 mass%, 0.4 mass%, 0.3 mass%, 0.2 mass%, 0.1 mass%, 0.05 mass%, etc. In an embodiment, the usage amount is preferably 0.05 mass% to 1.0 mass%.

Examples of a post-polymerization temperature include 100°C, 95°C, 90°C, 85°C, 80°C, 75°C, 70°C, 65°C, 60°C, 55°C, 50°C, etc. In an embodiment, the post-polymerization temperature is preferably 50°C to 100°C.

Examples of a post-polymerization time include 10 hours, 9 hours, 8 hours, 7 hours, 6 hours, 5 hours, 4 hours, 3 hours, 2 hours, 1.5 hours, 1 hour, etc. In an embodiment, the post-polymerization time is preferably 1 hour to 10 hours, and more preferably 2 hours to 10 hours.

In an embodiment, in either of the post-polymerization process and the pre-polymerization process, persulfate or a redox-based polymerization initiator may be used as the radical polymerization initiator.

Examples of persulfate include potassium persulfate, ammonium persulfate, etc.

Examples of a redox-based polymerization initiator include a combined system (persulfate and reducing agent) and the like.

Examples of a reducing agent include sodium bisulfite and the like.

<Physical properties (water-soluble polymer) and the like>

Examples of a weight average molecular weight (water-soluble polymer: Mw) include 6,000,000, 5,500,000, 5,000,000, 4,500,000, 4,000,000, 3,500,000, 3,000,000, 2,500,000, 2,000,000, 1,500,000, 1,000,000, 950,000, 900,000, 850,000, 800,000, 750,000, 700,000, 650,000, 600,000, 550,000, 500,000, 450,000, 400,000, 350,000, 300,000, 250,000, 200,000, 150,000, 100,000, etc. In an embodiment, the weight average molecular weight (Mw) is preferably 100,000 to 6,000,000, and more preferably 350,000 to 6,000,000.

Examples of a number average molecular weight (water-soluble polymer: Mn) include 6,000,000, 5,500,000, 5,000,000, 4,500,000, 4,000,000, 3,500,000, 3,000,000, 2,500,000, 2,000,000, 1,500,000, 1,000,000, 950,000, 900,000,

850,000, 800,000, 750,000, 700,000, 650,000, 600,000, 550,000, 500,000, 450,000, 400,000, 300,000, 200,000, 100,000, 50,000, 10,000, etc. In an embodiment, the number average molecular weight (Mn) is preferably 10,000 or more.

Examples of a molecular weight distribution (water-soluble polymer: Mw/Mn) include 15, 14, 13, 11, 10, 9, 7.5, 5, 4, 3, 2.9, 2.5, 2, 1.5, 1.1, etc. In an embodiment, the molecular weight distribution (Mw/Mn) is preferably 1.1 to 15.

Measurement conditions (weight average molecular weight, number average molecular weight) are as follows.

- Measurement instrument: GPC (Model: HLC-8420) manufactured by Tosoh Corporation
- Column: TSKgel guardcolumn PWXL, TSK-GEL G4000, TSK-GEL α-M (all manufactured by Tosoh Corporation)
- Eluent: 0.2M $NaNO_3$ 50mM phosphate buffer/acetonitrile = 90/10 (v/v) aqueous solution
- Column temperature: 40°C
- Calibration curve: standard polyethylene oxide-polyethylene glycol
- Measurement concentration: 0.10 mass% (water-soluble polymer concentration)
- Filter: cellulose acetate cartridge filter (manufactured by Tosoh Corporation, MYSHORI DISK W-13-2, pore size 0.2 μm)

Examples of a mass part content ((meth)acrylamide/water-soluble polymer) include less than 1000 mass ppm, 999 mass ppm, 950 mass ppm, 900 mass ppm, 850 mass ppm, 800 mass ppm, 750 mass ppm, 700 mass ppm, 650 mass ppm, 600 mass ppm, 550 mass ppm, 500 mass ppm, 450 mass ppm, 400 mass ppm, 350 mass ppm, 300 mass ppm, 250 mass ppm, 200 mass ppm, 150 mass ppm, 100 mass ppm, 50 mass ppm, 25 mass ppm, 10 mass ppm, 5 mass ppm, 1 mass ppm, 0.9 mass ppm, 0.7 mass ppm, 0.5 mass ppm, 0.3 mass ppm, 0.1 mass ppm, 0.09 mass ppm, 0.07 mass ppm, 0.05 mass ppm, 0.03 mass ppm, 0.01 mass ppm, etc. In an embodiment, the content is preferably 0.01 mass ppm or more and less than 1000 mass ppm.

Examples of a mass part content ((meth)acrylonitrile/water-soluble polymer) include less than 1000 mass ppm, 999 mass ppm, 950 mass ppm, 900 mass ppm, 850 mass ppm, 800 mass ppm, 750 mass ppm, 700 mass ppm, 650 mass ppm, 600 mass ppm, 550 mass ppm, 500 mass ppm, 450 mass ppm, 400 mass ppm, 350 mass ppm, 300 mass ppm, 250 mass ppm, 200 mass ppm, 150 mass ppm, 100 mass ppm, 50 mass ppm, 25 mass ppm, 10 mass ppm, 5 mass ppm, 1 mass ppm, 0.9 mass ppm, 0.7 mass ppm, 0.5 mass ppm, 0.3 mass ppm, 0.1 mass ppm, 0.09 mass ppm, 0.07 mass ppm, 0.05 mass ppm, 0.03 mass ppm, 0.01 mass ppm, 0 mass ppm, etc. In an embodiment, the content is preferably 0 mass ppm or more and less than 1000 mass ppm.

Examples of a mass part content (monomer/water-soluble polymer) include less than 2000 mass ppm, 1999 mass ppm, 1950 mass ppm, 1900 mass ppm, 1850 mass ppm, 1800 mass ppm, 1750 mass ppm, 1700 mass ppm, 1650 mass ppm, 1600 mass ppm, 1550 mass ppm, 1500 mass ppm, 1450 mass ppm, 1400 mass ppm, 1350 mass ppm, 1300 mass ppm, 1250 mass ppm, 1200 mass ppm, 1150 mass ppm, 1100 mass ppm, 1050 mass ppm, 1000 mass ppm, 999 mass ppm, 950 mass ppm, 900 mass ppm, 850 mass ppm, 800 mass ppm, 750 mass ppm, 700 mass ppm, 650 mass ppm, 600 mass ppm, 550 mass ppm, 500 mass ppm, 450 mass ppm, 400 mass ppm, 350 mass ppm, 300 mass ppm, 250 mass ppm, 200 mass ppm, 150 mass ppm, 100 mass ppm, 50 mass ppm, 25 mass ppm, 10 mass ppm, 5 mass ppm, 1 mass ppm, 0.9 mass ppm, 0.7 mass ppm, 0.5 mass ppm, 0.3 mass ppm, 0.1 mass ppm, 0.09 mass ppm, 0.07 mass ppm, 0.05 mass ppm, 0.03 mass ppm, 0.01 mass ppm, etc. In an embodiment, the content is preferably 0.01 mass ppm or more and less than 1000 mass ppm, and more preferably 0.01 mass ppm or more and less than 100 mass ppm.

The monomer content may be measured under the following conditions.

(1) Preparation (standard solutions)

The monomer ((meth)acrylamide, (meth)acrylonitrile) is collected in a 20 mL screw tube, diluted with ultrapure water, and standard aqueous solutions of 2000 ppm, 1000 ppm, 500 ppm, 100 ppm, 10 ppm, 1 ppm, and 0.5 ppm are prepared.

(2) (Meth)acrylamide calibration curve

Using the standard solutions, measurements are performed under the following conditions to create a calibration curve.

Measurement instrument: HPLC (Agilent 1260 Infinity2 PrimeLC)
Column: InertSustain AQ-C18
Column oven temperature: 40°C
Eluent: phosphate buffer solution (sodium dihydrogen phosphate/ultrapure water = 8/1000 (v/v) aqueous solution)
Measurement concentration: 0.20 mass% (water-soluble polymer concentration)
Injection volume: 4μL

(3) (Meth)acrylonitrile calibration curve

Using the standard solutions, measurements are performed under the following conditions to create a calibration curve.

Measurement instrument: GC (Agilent 7890B)-MS (Agilent 5977A)
Column: InertCap AQUATIC-2
Carrier gas: helium
Measurement concentration: 1 mass% (water-soluble polymer concentration)
Measurement conditions: 50°C (2 min.) → 230°C (5 min./min.)
Injection volume: 1000 μL

(4) Preparation (samples)

Each sample is diluted 50 times in a screw tube. Measurement is performed under the above conditions, and the monomer content in the sample is determined from the calibration curve.
(Meth)acrylamide may be manufactured by hydrolyzing (meth)acrylonitrile. Thus, even in the case where (meth) acrylonitrile is not used as the monomer, (meth)acrylonitrile may be present in the reaction system.
Examples of a mass ppm content (sulfur/power storage device binder aqueous solution) include 1000 ppm, 950 ppm, 900 ppm, 850 ppm, 800 ppm, 750 ppm, 700 ppm, 650 ppm, 600 ppm, 550 ppm, 500 ppm, 450 ppm, 400 ppm, 350 ppm, 300 ppm, 250 ppm, 200 ppm, 150 ppm, 100 ppm, 90 ppm, 75 ppm, 50 ppm, 25 ppm, 15 ppm, 14 ppm, 13 ppm, 11 ppm, 10 ppm, 9 ppm, 7 ppm, 5 ppm, 3 ppm, 1 ppm, 0 ppm, etc. In an embodiment, the content is preferably 1000 ppm or less. Examples of reasons for the preference include improved pencil hardness, improved breaking strength, etc.
The sulfur content may be measured under the following conditions.
Measurement is performed using an X-ray fluorescence analyzer (ZSX PrimusIV manufactured by Rigaku Corporation). The content is expressed as a value converted to oxide equivalent.

<Measurement conditions>

Measurement atmosphere: helium
Sample form: liquid
Measurement range: F to U
Measurement diameter: 30 mm
Measurement time: standard
Pre-measurement treatment: placing in a liquid sample container and covering with polypropylene (PP) film
Quantification method: semi-quantification using fundamental parameter method

In the case of non-detection (0 ppm) by the X-ray fluorescence analyzer, measurement is performed using combustion ion chromatography (AQF-2100H manufactured by Nittoseiko Analytech Co., Ltd.).

<Measurement conditions>

- Separation column: product name "IonPac AS12A", manufactured by DIONEX (inner diameter 4 mm, length 200 mm)
- Guard column: product name "IonPac AG12A", manufactured by DIONEX (inner diameter 4 mm, length 50 mm)
- Pre-measurement treatment: none
- Quantification method: quantification using calibration curve method with standard sample ($Na_2SO_4$)
- Solid weight of sample to be combusted: 50 mg
- Absorption liquid volume of gas generated after combustion: 10 mL
- Concentration of internal standard sample (sodium tartrate dihydrate) in absorption liquid: 10 ppm (tartrate ion concentration)
- Hydrogen peroxide concentration in absorption liquid (aqueous solution of hydrogen peroxide): 90 ppm
- Eluent: aqueous solution of 2.7 mmol/L sodium carbonate + 0.3 mmol/L sodium bicarbonate
- Absorption liquid being prepared by diluting with ultrapure water

Examples of a type B viscosity (power storage device binder aqueous solution) include 100,000 mPa·s, 90,000 mPa·s, 80,000 mPa·s, 70,000 mPa·s, 60,000 mPa·s, 50,000 mPa·s, 40,000 mPa·s, 30,000 mPa·s, 20,000 mPa·s, 10,000 mPa·s, 9,000 mPa·s, 8,000 mPa·s, 7,000 mPa·s, 6,000 mPa·s, 5,000 mPa·s, 4,000 mPa·s, 3,000 mPa·s, 2,000 mPa·s, 1,000 mPa·s, etc. In an embodiment, the type B viscosity is preferably 1,000 mPa·s to 100,000 mPa·s.
Measurement conditions (type B viscosity) include the following conditions.

Non-volatile content concentration: 15 mass%
Measurement temperature: 25°C
Type B viscometer: product name "Type B Viscometer Model TVB-10" manufactured by Toki Sangyo Co., Ltd.
Viscosity 100 to 10,000 mPa·s: No. 3 rotor, rotational speed 12 rpm
Viscosity exceeding 10,000 to 20,000 mPa·s: No. 3 rotor, rotational speed 6 rpm
Viscosity exceeding 20,000 to 100,000 mPa·s: No. 4 rotor, rotational speed 6 rpm

Examples of a glass transition temperature (water-soluble polymer) include 160°C, 155°C, 150°C, 145°C, 140°C, 135°C, 130°C, 125°C, 120°C, 115°C, 110°C, 105°C, 100°C, 95°C, 90°C, 85°C, 80°C, 75°C, 70°C, 65°C, 60°C, 55°C, 50°C, 45°C, 40°C, 35°C, 30°C, 25°C, 20°C, 15°C, 10°C, 5°C, 0°C, etc. In an embodiment, the glass transition temperature is preferably 0°C or higher, and more preferably 30°C or higher.
The glass transition temperature (water-soluble polymer) may be calculated based on a glass transition temperature (homopolymer) and a mass fraction (monomer) according to the Fox equation.

$$1/Tg = (W_1/Tg_1) + (W_2/Tg_2) + (W_3/Tg_3) + ... + (W_n/Tg_n)$$

[In the Fox equation, Tg represents the glass transition temperature (K) of the polymer to be determined, $W_1$ to $W_n$ represent the mass fraction of each monomer, and $Tg_1$ to $Tg_n$ represent the glass transition temperature (homopolymer) (K) of each monomer.]
The glass transition temperature may be measured by DSC (differential scanning calorimetry), DTA (differential thermal analysis), TMA (thermomechanical analysis), etc.

Measurement conditions (glass transition temperature) include the following conditions.
Temperature range: -100°C to 300°C
Heating rate: 10°C/min

The glass transition temperature (homopolymer) may also adopt values described in the literature. Examples of such a literature include page 325 of "Handbook of Chemistry: Pure Chemistry II" (Revised 5th Edition) edited by the Chemical Society of Japan, and the like. Examples of the glass transition temperature (homopolymer) include the following temperatures.

Acrylamide: 165°C
Acrylic acid: 106°C
Hydroxyethyl acrylate: -15°C
Acrylonitrile: 105°C

Examples of a mass% content (water-soluble polymer/power storage device binder aqueous solution) include 25 mass%, 20 mass%, 19 mass%, 15 mass%, 14 mass%, 12 mass%, 10 mass%, 9 mass%, 7 mass%, 6 mass%, 5 mass%, 4 mass%, 3 mass%, 2 mass%, 1 mass%, etc. In an embodiment, the content is preferably 1 mass% to 25 mass%.

<Water>

Examples of water include ultrapure water, pure water, distilled water, ion-exchanged water, tap water, etc.
Examples of a mass% content (water/power storage device binder aqueous solution) include 99.9 mass%, 99 mass%, 95 mass%, 90 mass%, 85 mass%, 80 mass%, 75 mass%, etc. In an embodiment, the content is preferably 75 mass% to 99.9 mass%.
Examples of a mass ratio (water-soluble polymer/water) include 0.33, 0.30, 0.25, 0.24, 0.22, 0.20, 0.18, 0.15, 0.12, 0.10, 0.09, 0.07, 0.05, etc. In an embodiment, the mass ratio is preferably 0.05 to 0.33.

<Hydrolyzed partial condensate of polyalkoxysilane: hydrolyzed partial condensate>

In an embodiment, the power storage device binder aqueous solution may optionally include a hydrolyzed partial condensate of polyalkoxysilane. The hydrolyzed partial condensate may be used alone or as a combination of two or more types.

Examples of polyalkoxysilane include trialkoxysilane, tetraalkoxysilane, etc.

In an embodiment, the trialkoxysilane is represented by the following formula.

[Chemical Formula Si1]

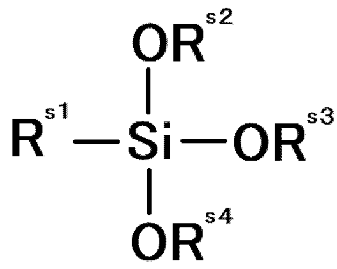

(In the formula, $R^{s1}$ represents a substituted or unsubstituted alkyl group or an alkenyl group. $R^{s2}$ to $R^{s4}$ each independently represent an alkyl group.)

"Substituted alkyl group" refers to a group in which hydrogen atoms constituting the alkyl group are substituted with groups other than hydrogen atoms and alkyl groups.

Examples of substituent include amino group, mercapto group, isocyanate group, (meth)acryloyloxy group, etc.

The amino group (amino group-containing group) is represented by the following formula.

$$-NR^{am1}R^{am2}$$

($R^{am1}$ to $R^{am2}$ each independently represent a hydrogen atom, an alkyl group, or an aryl group.)

Examples of amino group-containing trialkoxysilane include 3-aminopropyltrimethoxysilane, 3-aminopropyltriethoxysilane, N-2(aminoethyl)3-aminopropyltrimethoxysilane, N-2(aminoethyl)3-aminopropyltriethoxysilane, 3-triethoxysilyl-N-(1,3-dimethyl-butylidene)propylamine, N-phenyl-3-aminopropyltrimethoxysilane, etc.

Examples of mercapto group-containing trialkoxysilane include 3-mercaptopropyltrimethoxysilane and the like.

Examples of isocyanate group-containing trialkoxysilane include 3-isocyanatopropyltriethoxysilane and the like.

Examples of (meth)acryloyloxy group-containing trialkoxysilane include 3-(meth)acryloxypropyltrimethoxysilane, 3-(meth)acryloxypropyltriethoxysilane, etc.

Examples of alkenyl group include vinyl group, allyl group, etc.

Examples of alkenyl group-containing trialkoxysilane include vinyltrimethoxysilane, vinyltriethoxysilane, etc.

Examples of tetraalkoxysilane include tetramethoxysilane, tetramethoxysilane oligomer, tetraethoxysilane, tetraethoxysilane oligomer, etc.

"Hydrolyzed partial condensate of polyalkoxysilane" refers to a hydrolyzed condensate in which alkoxy groups are present. From the viewpoint of preventing gelling, a hydrolyzed partial condensate of polyalkoxysilane is used rather than a hydrolyzed complete condensate of polyalkoxysilane.

Examples of a degree of condensation (hydrolyzed partial condensate) include 1000, 900, 800, 700, 600, 500, 400, 300, 200, 100, 90, 80, 70, 60, 50, 40, 30, 20, 19, 17, 15, 14, 13, 12, 11, 10, 9, 5, 3, 2, 1.7, 1.5, 1.4, 1.2, 1.1, 1.01, etc. In an embodiment, the degree of condensation is preferably 1.01 to 1000, and more preferably 1.01 to 100.

Examples of a weight average molecular weight (hydrolyzed partial condensate) include 190,000, 170,000, 150,000, 130,000, 100,000, 90,000, 70,000, 50,000, 30,000, 20,000, 10,000, 9,000, 7,500, 5,000, 2,500, 1,000, 900, 750, 500, 250, 200, 175, 160, 150, 125, 110, 100, etc. In an embodiment, the weight average molecular weight is preferably 100 to 190,000.

The hydrolyzed partial condensate of polyalkoxysilane may be manufactured by hydrolyzing 100 parts by mass of polyalkoxysilane in the presence of 0 parts by mass to 5 parts by mass of an acid catalyst or a base catalyst (preferably an acid catalyst) at a reaction temperature of 30°C to 60°C for 0.5 hours to 5.0 hours, and partially condensing it.

Examples of the acid catalyst include nitric acid, hydrochloric acid, sulfurous acid, phosphoric acid, formic acid, acetic acid, etc.

Examples of the base catalyst include sodium hydroxide, lithium hydroxide, potassium hydroxide, calcium hydroxide, amine compound, etc.

Examples of a mass% content (hydrolyzed partial condensate/power storage device binder aqueous solution) include 10 mass%, 9 mass%, 8 mass%, 7 mass%, 6 mass%, 5 mass%, 4.5 mass%, 4 mass%, 3.5 mass%, 3 mass%, 2.5 mass%, 2 mass%, 1.5 mass%, 1 mass%, 0.9 mass%, 0.5 mass%, 0.1 mass%, 0.09 mass%, 0.05 mass%, 0.03 mass%, 0.01 mass%, etc. In an embodiment, the content is preferably 0.01 mass% to 10 mass%.

<Other binder>

In an embodiment, the power storage device binder aqueous solution may optionally include a binder other than the water-soluble polymer (other binder). The "other binder" may be used alone or as a combination of two or more types.
Examples of the other binder include diene-based copolymer, fluorine-based copolymer, amide-imide-based copolymer, and copolymer other than the above.
Examples of diene-based copolymer include styrene-butadiene-based copolymer, polybutadiene-based polymer, acrylonitrile-butadiene-based copolymer, methyl methacrylate-butadiene-based copolymer, carboxy-modified styrene-butadiene copolymer, etc.
Examples of fluorine-based copolymer include polyvinylidene fluoride (PVDF), polytetrafluoroethylene (PTFE), tetrafluoroethylene-hexafluoropropylene copolymer (FEP), tetrafluoroethylene-perfluoroalkyl vinyl ether copolymer (PFA), ethylene-tetrafluoroethylene copolymer (ETFE), etc.
Examples of amide-imide-based copolymer include polyamide (PA), polyimide (PI), polyamide imide (PAI), aromatic polyamide, etc.
Examples of copolymer other than the above include polyurethane-based polymer, poly(meth)acrylate-based polymer, vinyl chloride-based polymer, vinyl acetate-based polymer, vinyl acetate-ethylene-based copolymer, polyethylene, polypropylene, polyethylene terephthalate, polystyrene-based polymer, alginic acid and/or a salt thereof, etc.
Examples of a mass part content (other binder/water-soluble polymer) include 100 parts by mass, 95 parts by mass, 90 parts by mass, 85 parts by mass, 80 parts by mass, 75 parts by mass, 70 parts by mass, 65 parts by mass, 60 parts by mass, 55 parts by mass, 50 parts by mass, 45 parts by mass, 40 parts by mass, 35 parts by mass, 30 parts by mass, 25 parts by mass, 20 parts by mass, 19 parts by mass, 17 parts by mass, 15 parts by mass, 13 parts by mass, 10 parts by mass, 9 parts by mass, 7 parts by mass, 5 parts by mass, 4 parts by mass, 2 parts by mass, 1 part by mass, 0 parts by mass, etc. In an embodiment, the content is preferably 0 parts by mass to 100 parts by mass.

<Dispersion (emulsion)>

In an embodiment, the power storage device binder aqueous solution may optionally include a dispersion (emulsion). The dispersion (emulsion) may be used alone or as a combination of two or more types.
Examples of a dispersion (emulsion) include styrene-butadiene-based copolymer latex, polystyrene-based polymer latex, polybutadiene-based polymer latex, acrylonitrile-butadiene-based copolymer latex, polyurethane-based polymer latex, polymethyl methacrylate-based polymer latex, methyl methacrylate-butadiene-based copolymer latex, polyacrylate-based polymer latex, vinyl chloride-based polymer latex, vinyl acetate-based polymer emulsion, vinyl acetate-ethylene-based copolymer emulsion, polyethylene emulsion, carboxy-modified styrene-butadiene copolymer resin emulsion, acrylic resin emulsion, polyethylene, polypropylene, polyethylene terephthalate, polyamide (PA), polyimide (PI), polyamide imide (PAI), aromatic polyamide, alginic acid and a salt thereof, polyvinylidene fluoride (PVDF), polytetrafluoroethylene (PTFE), tetrafluoroethylene-hexafluoropropylene copolymer (FEP), tetrafluoroethylene-perfluoroalkyl vinyl ether copolymer (PFA), ethylene-tetrafluoroethylene copolymer (ETFE), etc.
Examples of a mass part content (dispersion (emulsion)/water-soluble polymer) include 100 parts by mass, 95 parts by mass, 90 parts by mass, 85 parts by mass, 80 parts by mass, 75 parts by mass, 70 parts by mass, 65 parts by mass, 60 parts by mass, 55 parts by mass, 50 parts by mass, 45 parts by mass, 40 parts by mass, 35 parts by mass, 30 parts by mass, 25 parts by mass, 20 parts by mass, 19 parts by mass, 17 parts by mass, 15 parts by mass, 13 parts by mass, 10 parts by mass, 9 parts by mass, 7 parts by mass, 5 parts by mass, 4 parts by mass, 2 parts by mass, 1 part by mass, 0 parts by mass, etc. In an embodiment, the content is preferably 0 parts by mass to 100 parts by mass.

<Thickener>

In an embodiment, the power storage device binder aqueous solution may optionally include a thickener. The thickener may be used alone or as a combination of two or more types.
Examples of a thickener include cellulose-based polymer and/or a salt thereof, polyvinyl alcohols, (modified) poly(meth)acrylic acid and/or a salt thereof, polyethylene glycol, polyethylene oxide, polyvinylpyrrolidone, oxidized starch, phosphoric acid starch, casein, modified starch, acrylonitrile-butadiene copolymer hydride, etc.
Examples of cellulose-based polymer and/or a salt thereof include carboxymethyl cellulose, methyl cellulose, hydroxypropyl cellulose, etc.

Examples of polyvinyl alcohols include copolymer of (anhydrous) maleic acid and/or fumaric acid with vinyl alcohol, and the like.

Examples of a mass part content (thickener/water-soluble polymer) include 100 parts by mass, 95 parts by mass, 90 parts by mass, 85 parts by mass, 80 parts by mass, 75 parts by mass, 70 parts by mass, 65 parts by mass, 60 parts by mass, 55 parts by mass, 50 parts by mass, 45 parts by mass, 40 parts by mass, 35 parts by mass, 30 parts by mass, 25 parts by mass, 20 parts by mass, 19 parts by mass, 17 parts by mass, 15 parts by mass, 13 parts by mass, 10 parts by mass, 9 parts by mass, 7 parts by mass, 5 parts by mass, 4 parts by mass, 2 parts by mass, 1 part by mass, 0 parts by mass, etc. In an embodiment, the content is preferably 0 parts by mass to 100 parts by mass.

<Additive>

The power storage device binder aqueous solution may optionally include, as an additive, an agent that does not correspond to any of the water-soluble polymer, the water, the hydrolyzed partial condensate of polyalkoxysilane, the other binder, the dispersion (emulsion), and the thickener. The additive may be used alone or as a combination of two or more types.

Examples of an additive include a dispersant, a leveling agent, an antioxidant, etc.

Examples of a dispersant include an anionic dispersant, a cationic dispersant, a nonionic dispersant, a polymeric dispersant, etc.

Examples of a leveling agent include a surfactant and the like.

Examples of a surfactant include an alkyl-based surfactant, a silicone-based surfactant, a fluorine-based surfactant, a metal-based surfactant, etc.

Examples of an antioxidant include phenol compound, hydroquinone compound, organic phosphorus compound, sulfur compound, phenylenediamine compound, polymer-type phenol compound, etc.

"Polymer-type phenol compound" refers to a polymer having a phenol structure. A weight average molecular weight (polymer-type phenol compound) is preferably 200 to 1000, and more preferably 600 to 700.

Examples of a mass part content (additive/water-soluble polymer) include less than 5 parts by mass, less than 4 parts by mass, less than 2 parts by mass, less than 1 part by mass, less than 0.9 parts by mass, less than 0.5 parts by mass, less than 0.4 parts by mass, less than 0.2 parts by mass, less than 0.1 parts by mass, less than 0.09 parts by mass, less than 0.05 parts by mass, less than 0.04 parts by mass, less than 0.02 parts by mass, less than 0.01 parts by mass, 0 parts by mass, etc.

Examples of a mass% content (additive/power storage device binder aqueous solution) include less than 5 mass%, less than 4 mass%, less than 2 mass%, less than 1 mass%, less than 0.9 mass%, less than 0.5 mass%, less than 0.4 mass%, less than 0.2 mass%, less than 0.1 mass%, less than 0.09 mass%, less than 0.05 mass%, less than 0.04 mass%, less than 0.02 mass%, less than 0.01 mass%, 0 mass%, etc.

Examples of a pH (power storage device binder aqueous solution) include 9, 8.9, 8.5, 8, 7.9, 7.5, 7, 6.9, 6.5, 6, 5.9, 5.6, 5.5, 5.4, 5.2, 5.1, 5, etc. In an embodiment, the pH is preferably 5 to 9, and more preferably 5 to 7.

Measurement conditions (pH) include the following conditions.

Measurement instrument: "pH meter D-52" manufactured by HORIBA, Ltd.
Measurement temperature: 25°C

Examples of applications (power storage device binder aqueous solution) include a power storage device electrode binder aqueous solution, a battery electrode binder aqueous solution, a non-aqueous secondary battery electrode binder aqueous solution, a lithium ion battery electrode binder aqueous solution, a sodium ion battery electrode binder aqueous solution, a power storage device negative electrode binder aqueous solution, a battery negative electrode binder aqueous solution, a non-aqueous secondary battery negative electrode binder aqueous solution, a lithium ion battery negative electrode binder aqueous solution, a sodium ion battery negative electrode binder aqueous solution, a power storage device positive electrode binder aqueous solution, a battery positive electrode binder aqueous solution, a non-aqueous secondary battery positive electrode binder aqueous solution, a lithium ion battery positive electrode binder aqueous solution, a sodium ion battery positive electrode binder aqueous solution, a power storage device separator binder aqueous solution, a battery separator binder aqueous solution, a non-aqueous secondary battery separator binder aqueous solution, a lithium ion battery separator binder aqueous solution, a sodium ion battery separator binder aqueous solution, etc.

[Power storage device slurry: slurry]

The disclosure relates to a power storage device slurry including a water-soluble polymer, (meth)acrylamide, (meth)acrylonitrile, and water, where

the water-soluble polymer includes 0.01 mass% to 1 mass% of a polymerization initiator unit, and
a content of the (meth)acrylamide with respect to the water-soluble polymer is 0.01 mass ppm or more and less than 1000 mass ppm.

In the disclosure, "slurry" refers to a suspension of liquid and solid particles.
The water-soluble polymer, water, other binder, dispersion (emulsion), and thickener are, for example, the substances described above.
Examples of a mass% content (water-soluble polymer/slurry) include 10 mass%, 9 mass%, 8 mass%, 7 mass%, 6 mass%, 5 mass%, 4 mass%, 3 mass%, 2 mass%, 1 mass%, 0.9 mass%, 0.7 mass%, 0.5 mass%, 0.3 mass%, 0.1 mass%, etc. In an embodiment, the content is preferably 0.1 mass% to 10 mass%.
Examples of a mass% content (water/slurry) include 80 mass%, 75 mass%, 70 mass%, 65 mass%, 60 mass%, 55 mass%, 50 mass%, 45 mass%, 40 mass%, 35 mass%, 30 mass%, etc. In an embodiment, the content is preferably 30 mass% to 80 mass%.
Examples of a mass% content (hydrolyzed partial condensate/slurry) include 5 mass%, 4.5 mass%, 4 mass%, 3.5 mass%, 3 mass%, 2.5 mass%, 2 mass%, 1.5 mass%, 1 mass%, 0.9 mass%, 0.5 mass%, 0.1 mass%, 0.09 mass%, 0.05 mass%, 0.03 mass%, 0.01 mass%, etc. In an embodiment, the content is preferably 0.01 mass% to 5 mass%.
Examples of a mass ppm content (sulfur/slurry) include 1000 ppm, 950 ppm, 900 ppm, 850 ppm, 800 ppm, 750 ppm, 700 ppm, 650 ppm, 600 ppm, 550 ppm, 500 ppm, 450 ppm, 400 ppm, 350 ppm, 300 ppm, 250 ppm, 200 ppm, 150 ppm, 100 ppm, 90 ppm, 75 ppm, 50 ppm, 25 ppm, 15 ppm, 14 ppm, 13 ppm, 11 ppm, 10 ppm, 9 ppm, 7 ppm, 5 ppm, 3 ppm, 1 ppm, 0 ppm, etc. In an embodiment, the content is preferably 1000 ppm or less. Examples of reasons for the preference include improved pencil hardness, improved breaking strength, etc.
A content (polymerization initiator unit), a content ((meth)acrylamide), a content ((meth)acrylonitrile), a content (monomer), a content (other binder), a content (dispersion (emulsion)), and a content (thickener) are, for example, the contents described above.

<Electrode active material>

In an embodiment, the power storage device slurry includes an electrode active material. Examples of the electrode active material include a negative electrode active material and a positive electrode active material. The electrode active material may be used alone or as a combination of two or more types.

(Negative electrode active material)

Examples of the negative electrode active material include carbon material, material that forms alloy with lithium, silicon material, lithium atom-containing oxide, etc.
Examples of carbon material include graphite, low crystallinity carbon, carbon black, fullerene, carbon nanotube, carbon nanofiber, carbon nanohorn, carbon fibril, mesocarbon microbeads (MCMB), pitch-based carbon fiber, activated carbon, etc.
Examples of graphite include natural graphite, artificial graphite, etc.
Examples of low crystallinity carbon include soft carbon, hard carbon, etc.
Examples of carbon black include Ketjen black, acetylene black, channel black, lamp black, oil furnace black, thermal black, etc.
Examples of material that forms alloy with lithium include lead compound, tin compound, arsenic compound, antimony compound, aluminum compound, etc.
Examples of silicon material include silicon, silicon oxide, silicon alloy, SiC, $SiO_xC_y$ ($0 < x \leq 3$, $0 < y \leq 5$), $Si_3N_4$, $Si_2N_2O$, $SiO_z$ ($0 < z \leq 2$), etc.
Silicon oxide is preferably silicon oxide represented by a compositional formula $SiO_z$ ($0 < z \leq 2$, preferably $0.1 \leq z \leq 1$).
Examples of silicon alloy include silicon-titanium alloy, silicon-zirconium alloy, silicon-nickel alloy, silicon-copper alloy, silicon-iron alloy, silicon-molybdenum alloy, etc. In an embodiment, the silicon alloy is preferably silicon-nickel alloy and silicon-titanium alloy, and more preferably, silicon-titanium alloy.
A mol% content (silicon atoms/all metal elements) is preferably 10 mol% or more, and more preferably 20 mol% to 70 mol%.
A configuration of silicon material is, for example, single crystal, polycrystalline, amorphous, etc.
In the case where silicon material is used as the electrode active material, an electrode active material other than the silicon material may be used in combination.
Examples of an electrode active material other than the silicon material include carbon material, conductive polymer, composite metal oxide, etc.

Examples of conductive polymer include polyacene and the like.
The composite metal oxide is expressed by, for example, the following general formula.

$$A_\alpha B_\beta O_\gamma$$

(A represents an alkali metal or a transition metal. B represents at least one selected from transition metals such as cobalt, nickel, aluminum, tin, manganese, etc. O represents an oxygen atom. $\alpha$, $\beta$, and $\gamma$ are independently $0.05 < \alpha < 1.10$, $0.85 < \beta < 4.00$, and $1.5 < \gamma < 5.00$, respectively.)
The carbon material has a small volume change associated with absorption and release of lithium. Thus, in the case of using silicon material as the electrode active material, it is preferable to use in combination with the carbon material.
In an embodiment, the silicon material is preferably silicon covered with a carbon layer, and silicon oxide covered with a carbon layer.
Examples of lithium atom-containing oxide includes lithium-transition metal composite oxide, lithium-transition metal phosphate compound, lithium-transition metal sulfate compound, etc.
Examples of lithium-transition metal composite oxide include lithium-manganese composite oxide, lithium-nickel composite oxide, lithium-cobalt composite oxide, lithium-iron composite oxide, lithium-titanium composite oxide, lithium-nickel-manganese composite oxide, lithium-nickel-cobalt composite oxide, etc.
In an embodiment, examples of a mass% content (carbon material and/or material that forms alloy with lithium/negative electrode active material) include 100 mass%, 95 mass%, 90 mass%, 85 mass%, 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 15 mass%, 10 mass%, 5 mass%, 0 mass%, etc. In an embodiment, the content is preferably 50 mass% or more, more preferably 80 mass% or more, even more preferably 90 mass% or more, and particularly preferably 100 mass%.
In an embodiment, examples of a mass% content (silicon covered with carbon layer and/or silicon oxide covered with carbon layer/negative electrode active material) include 100 mass%, 90 mass% or more, 75 mass% or more, 50 mass% or more, 25 mass% or more, 10 mass% or more, 5 mass% or more, 2 mass% or more, 1 mass% or more, 0 mass%, etc.
In an embodiment, examples of a mass% content (silicon material/negative electrode active material) include 100 mass%, 95 mass%, 90 mass%, 85 mass%, 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 15 mass%, 10 mass%, 5 mass%, 0 mass%, etc.

(Positive electrode active material)

Examples of the positive electrode active material include a positive electrode inorganic active material, a positive electrode organic active material, etc.
Examples of a positive electrode inorganic active material include transition metal oxide, lithium-transition metal composite oxide, transition metal sulfide, activated carbon, etc.
The inorganic active material may have elements partially substituted. The inorganic active material may be used as an electrode active material covered with carbon material by causing a carbon source material to be present during reduction firing.
Examples of a positive electrode organic active material include conductive polymer and the like.
Examples of conductive polymer include polyacetylene, poly-p-phenylene, etc.

(Physical properties and the like (electrode active material))

Examples of a form (electrode active material) include a fine particle form, a thin film form, etc.
An average particle diameter (electrode active material) is preferably 0.1 to 50 $\mu$m, more preferably 0.1 to 45 $\mu$m, even more preferably 1 to 10 $\mu$m, and particularly preferably 5 $\mu$m.
In the disclosure, "particle diameter" refers to a maximum distance among distances between any two points on an outline of a particle. "Average particle diameter" refers to a value calculated as an average value of particle diameters of particles observed in several to tens of fields using an observation means such as a scanning electron microscope (SEM) or a transmission electron microscope (TEM).
Examples of a mass part content (water-soluble polymer/electrode active material) include 15 parts by mass, 14 parts by mass, 13 parts by mass, 12 parts by mass, 11 parts by mass, 10 parts by mass, 9 parts by mass, 8 parts by mass, 7 parts by mass, 6 parts by mass, 5 parts by mass, 4 parts by mass, 3 parts by mass, 2 parts by mass, 1.5 parts by mass, 1 part by mass, 0.5 parts by mass, etc. In an embodiment, the content is preferably 0.5 parts by mass to 15 parts by mass.

(Conductive auxiliary agent)

In an embodiment, the slurry may optionally include a conductive auxiliary agent. The conductive auxiliary agent may be used alone or as a combination of two or more types.
Examples of a conductive auxiliary agent include fibrous carbon, carbon black, metal fine powder, etc.
Examples of fibrous carbon include vapor grown carbon fiber (VGCF), carbon nanotube (CNT), carbon nanofiber (CNF), etc.
Examples of carbon black include graphite particles, acetylene black, Ketjen black, furnace black, etc.
Examples of metal fine powder include copper fine powder, nickel fine powder, aluminum fine powder, silicon fine powder, alloy fine powder, etc.
In an embodiment, an average particle diameter (metal fine powder) is preferably 10 μm.
A mass part content (conductive auxiliary agent/electrode active material) is preferably 0 to 10 parts by mass, and more preferably 0 parts by mass to 6 parts by mass.

<Non-conductive particle>

In an embodiment, the power storage device slurry includes a non-conductive particle. The non-conductive particle may be used alone or as a combination of two or more types.
Examples of a non-conductive particle include an oxide particle, a hydroxide particle, a nitride particle, a covalently bonded crystal particle, a sparingly soluble ionic crystal particle, a clay microparticle, an aluminum particle, a barium particle, a calcium particle, etc.
Examples of an oxide particle include aluminum oxide (alumina), aluminum oxide hydrate (boehmite (AlOOH), gibbsite ($Al(OH)_3$)), bakelite, iron oxide, silicon oxide, magnesium oxide (magnesia), calcium oxide, titanium oxide (titania), $BaTiO_3$, ZrO, alumina-silica composite oxide, etc.
Examples of a hydroxide particle include calcium hydroxide, magnesium hydroxide, etc.
Examples of a nitride particle include aluminum nitride, silicon nitride, boron nitride, etc.
Examples of a covalently bonded crystal particle include silicon, diamond, etc.
Examples of a sparingly soluble ionic crystal particle include barium sulfate, calcium fluoride, barium fluoride, etc.
Examples of a clay microparticle include clay microparticles such as silica, talc, montmorillonite, etc.
Examples of an aluminum particle include aluminum oxide (alumina), aluminum oxide hydrate (boehmite (AlOOH), gibbsite ($Al(OH)_3$)), aluminum nitride, etc.
Examples of a barium particle include barium sulfate, barium fluoride, etc.
Examples of a calcium particle include calcium hydroxide, magnesium hydroxide, calcium fluoride, etc.
In an embodiment, the non-conductive particle is preferably boehmite, alumina, magnesium oxide, and barium sulfate.
Examples of an average particle diameter (non-conductive particle) include 30 μm, 25 μm, 20 μm, 15 μm, 10 μm, 5 μm, 1 μm, 0.5 μm, 0.1 μm, 0.05 μm, 0.01 μm, etc. In an embodiment, the average particle diameter is preferably 0.01 μm to 30 μm.
Examples of a mass% content (non-conductive particle/slurry) include 99.9 mass%, 95 mass%, 90 mass%, 80 mass%, 70 mass%, 60 mass%, 50 mass%, 40 mass%, 30 mass%, 20 mass%, 10 mass%, 5 mass%, 1 mass%, 0.5 mass%, 0.2 mass%, 0.1 mass%, etc. In an embodiment, the content is preferably 0.1 mass% to 99.9 mass%.
Examples of a mass part content (water-soluble polymer/non-conductive particle) include 15 parts by mass, 14 parts by mass, 13 parts by mass, 12 parts by mass, 11 parts by mass, 10 parts by mass, 9 parts by mass, 8 parts by mass, 7 parts by mass, 6 parts by mass, 5 parts by mass, 4 parts by mass, 3 parts by mass, 2 parts by mass, 1.5 parts by mass, 1 part by mass, etc. In an embodiment, the content is preferably 1 part by mass to 15 parts by mass, more preferably 1.5 parts by mass to 14 parts by mass, and even more preferably 2 parts by mass to 12 parts by mass.

<Slurry viscosity adjustment solvent>

A slurry viscosity adjustment solvent may be used alone or as a combination of two or more types.
Examples of a slurry viscosity adjustment solvent include an amide solvent, a hydrocarbon solvent, an alcohol solvent, a ketone solvent, an ether solvent, an ester solvent, an amine solvent, a lactone solvent, a sulfoxide/sulfone solvent, water, etc.
Examples of an amide solvent include N-methylpyrrolidone, dimethylformamide, N,N-dimethylacetamide, etc.
Examples of a hydrocarbon solvent include toluene, xylene, n-dodecane, tetralin, etc.
Examples of an alcohol solvent include methanol, ethanol, 2-propanol, isopropyl alcohol, 2-ethyl-1-hexanol, 1-nonanol, lauryl alcohol, etc.
Examples of a ketone solvent include acetone, methyl ethyl ketone, cyclohexanone, phorone, acetophenone,

isophorone, etc.

Examples of an ether solvent include dioxane, tetrahydrofuran (THF), etc.

Examples of an ester solvent include benzyl acetate, isopentyl butyrate, methyl lactate, ethyl lactate, butyl lactate, etc.

Examples of an amine solvent include o-toluidine, m-toluidine, p-toluidine, etc.

Examples of a lactone solvent include γ-butyrolactone, δ-butyrolactone, etc.

Examples of a sulfoxide/sulfone solvent include dimethyl sulfoxide, sulfolane, etc.

In an embodiment, the slurry viscosity adjustment solvent is preferably N-methylpyrrolidone.

Examples of a mass% content (slurry viscosity adjustment solvent/slurry) include 10 mass%, 9 mass%, 8 mass%, 7 mass%, 6 mass%, 5 mass%, 4 mass%, 3 mass%, 2 mass%, 1 mass%, 0 mass%, etc. In an embodiment, the content is preferably 0 to 10 mass%.

<Additive>

The slurry may optionally include, as an additive, an agent that does not correspond to any of the water-soluble polymer, the water, the other binder, the dispersion (emulsion), the thickener, the electrode active material, the non-conductive particle, and the slurry viscosity adjustment solvent. The additive is, for example, the agents described above.

Examples of a mass% content (additive/slurry) include 0 mass% to 5 mass%, less than 1 mass%, less than 0.1 mass%, less than 0.01 mass%, 0 mass%, etc.

Examples of a mass part content (additive/water-soluble polymer), a mass part content (additive/water), a mass part content (additive/hydrolyzed partial condensate of polyalkoxysilane), a mass part content (additive/other binder), a mass part content (additive/dispersion (emulsion)), a mass part content (additive/thickener), a mass part content (additive/electrode active material), a mass part content (additive/non-conductive particle), and a mass part content (additive/slurry viscosity adjustment solvent) include 0 parts by mass to 5 parts by mass, less than 1 part by mass, less than 0.1 parts by mass, less than 0.01 parts by mass, 0 parts by mass, etc.

Manufacturing of the slurry may be performed by mixing the water-soluble polymer, the water, and the electrode active material or the non-conductive particle, and as needed, the hydrolyzed partial condensate of polyalkoxysilane, the other binder, the dispersion (emulsion), the thickener, the slurry viscosity adjustment solvent, and the additive.

Examples of a mixing means (slurry) include a ball mill, a sand mill, a pigment disperser, a grinding machine, an ultrasonic disperser, a homogenizer, a planetary mixer, a Hobart mixer, etc.

Examples of applications (power storage device slurry) include a power storage device electrode slurry, a battery electrode slurry, a non-aqueous secondary battery electrode slurry, a lithium ion battery electrode slurry, a sodium ion battery electrode slurry, a power storage device negative electrode slurry, a battery negative electrode slurry, a non-aqueous secondary battery negative electrode slurry, a lithium ion battery negative electrode slurry, a sodium ion battery negative electrode slurry, a power storage device positive electrode slurry, a battery positive electrode slurry, a non-aqueous secondary battery positive electrode slurry, a lithium ion battery positive electrode slurry, a sodium ion battery positive electrode slurry, a power storage device separator slurry, a battery separator slurry, a non-aqueous secondary battery separator slurry, a lithium ion battery separator slurry, a sodium ion battery separator slurry, etc.

[Power storage device electrode: electrode]

The disclosure relates to a power storage device electrode having a dried product of the above power storage device slurry on a current collector.

The power storage device electrode is obtained by applying the power storage device slurry to a current collector and drying it.

Examples of a current collector include metal material, carbon material, etc.

Examples of metal material include copper, iron, aluminum, nickel, stainless steel, nickel-plated steel, etc.

Examples of a form of the metal material include a metal foil, a metal cylinder, a metal coil, a metal plate, etc.

Examples of carbon material include carbon cloth, carbon paper, etc.

Examples of a form (carbon material) include a carbon plate, a carbon thin film, a carbon cylinder, etc.

Examples of an application means include a comma coater, a gravure coater, a micro-gravure coater, a die coater, a bar coater, etc.

A drying temperature is preferably 60°C to 200°C, and more preferably 70°C to 195°C.

Examples of a drying atmosphere include dry air, inert atmosphere, etc.

A thickness (electrode (cured product)) is preferably 5 μm to 300 μm, and more preferably 10 μm to 250 μm.

Examples of applications (power storage device electrode) include a power storage device positive electrode, a power storage device negative electrode, a battery electrode, a battery positive electrode, a battery negative electrode, a non-aqueous secondary battery electrode, a non-aqueous secondary battery positive electrode, a non-aqueous secondary battery negative electrode, a lithium ion battery electrode, a lithium ion battery positive electrode, a lithium ion battery negative electrode, a sodium ion battery electrode, a sodium ion battery positive electrode, a sodium ion battery negative electrode, etc.

[Power storage device separator: separator]

The disclosure relates to a power storage device separator having a dried product of the above power storage device slurry on a base material.
Manufacturing of the power storage device separator may be performed by applying the power storage device separator slurry to one side or both sides of a base material and drying it.
Examples of a base material include a porous polyolefin resin base material, a plastic nonwoven fabric, etc.

(Porous polyolefin resin base material)

"Porous polyolefin resin base material" refers to a fine porous film containing 30 mass% or more of a resin of polyolefin, a mixture or a copolymer thereof, etc.
The polyolefin resin may be used alone or as a combination of two or more types. Examples of the polyolefin resin include homopolymers, copolymers, etc. of ethylene, propylene, 1-butene, 4-methyl-1-pentene, 1-hexene, 1-octene, etc.
Examples of a stereochemical structure (polyolefin) include an isotactic structure, a syndiotactic structure, an atactic structure, etc.
In an embodiment, the polyolefin resin is preferably high-density polyethylene, and more preferably high-density polyethylene and polypropylene.
In an embodiment, a mass% content (polyolefin resin/base material) is preferably 30 mass% to 100 mass%, more preferably 40 mass% to 100 mass%, and even more preferably 50 mass% to 100 mass%.
The porous polyolefin resin base material may optionally include a filler and a fibrous compound. The strength, hardness, and thermal shrinkage rate of the porous polyolefin resin base material may be controlled by the filler and the fibrous compound.
The porous polyolefin resin base material may be subjected to a surface treatment as needed.
Examples of a surface treatment include a coating treatment, an electromagnetic radiation treatment, a plasma treatment, etc.
In an embodiment, the surface treatment is preferably a coating treatment with a polar group-containing polymer. By the coating treatment, electrolytic solution impregnation properties and adhesion with the dried product of the slurry may be enhanced. Examples of a polar group include carboxylic acid group, hydroxyl group, sulfonic acid group, etc.
In an embodiment, a thickness (porous polyolefin resin base material) is preferably 2 μm to 100 μm, and more preferably 5 μm to 50 μm.

(Plastic nonwoven fabric)

Examples of the plastic nonwoven fabric include a nonwoven fabric composed only of a synthetic fiber and the like.
Examples of a synthetic fiber include polyolefin-based resin, polyester-based resin, acrylonitrile-based resin, polyamide-based resin, polyvinyl acetate-based resin, ethylene-vinyl acetate copolymer resin, acrylic resin, polyvinyl chloride-based resin, polyvinylidene chloride-based resin, polyvinyl ether-based resin, polyvinyl ketone-based resin, polyether-based resin, polyvinyl alcohol-based resin, diene-based resin, polyurethane-based resin, phenol-based resin, melamine-based resin, furan-based resin, urea-based resin, aniline-based resin, unsaturated polyester-based resin, alkyd-based resin, fluorine-based resin, silicone-based resin, polyamideimide-based resin, polyphenylene sulfide-based resin, polyimide-based resin, polycarbonate-based resin, polyazomethine-based resin, polyesteramide resin, polyether ether ketone-based resin, poly-p-phenylene benzobisoxazole resin, polybenzimidazole-based resin, ethylene-vinyl alcohol copolymer-based resin.
Examples of polyolefin-based resin include polypropylene, polyethylene, polymethylpentene, ethylene-vinyl alcohol copolymer, olefin-based copolymer, etc.
Examples of polyester-based resin include polyethylene terephthalate (PET)-based resin, polybutylene terephthalate (PBT)-based resin, polytrimethylene terephthalate (PPT)-based resin, polyethylene naphthalate (PEN)-based resin, polybutylene naphthalate-based resin, polyethylene isophthalate-based resin, wholly aromatic polyester-based resin, etc.
Examples of acrylonitrile-based resin include polyacrylonitrile, copolymer of acrylonitrile with (meth)acrylic acid derivative, vinyl acetate, etc.
Examples of polyamide-based resin include aliphatic polyamide, wholly aromatic polyamide, semi-aromatic

polyamide, etc.

Examples of aliphatic polyamide include nylon and the like.

Examples of wholly aromatic polyamide include poly-p-phenylene terephthalamide, poly-p-phenylene terephthalamide-3,4-diphenyl ether terephthalamide, poly-m-phenylene isophthalamide, etc.

"Semi-aromatic polyamide" refers to polyimide in which a part of the main chain of aromatic polyamide is an aliphatic chain.

The plastic nonwoven fabric fiber may optionally include a fiber other than the synthetic resin fiber.

Examples of a fiber other than the synthetic resin fiber include solvent-spun cellulose, fibrillated solvent-spun cellulose, regenerated cellulose, fibrillated regenerated cellulose, natural cellulose fiber, pulped natural cellulose fiber, fibrillated natural cellulose fiber, inorganic fiber, etc.

A mass% content (fiber other than synthetic fiber/nonwoven fabric) is preferably 50 mass% or less, more preferably 30 mass% or less, and even more preferably 10 mass% or less.

Examples of a form (form) include single fiber, composite fiber, etc.

"Single fiber" refers to a fiber composed of a single resin. "Composite fiber" refers to a fiber composed of two or more types of resins.

Examples of a form (composite fiber) include a core-sheath type, an eccentric type, a side-by-side type, an islands-in-sea type, an orange type, a multiple bimetal type, etc.

In an embodiment, an average fiber diameter (plastic nonwoven fabric) is preferably 1 μm to 15 μm, and more preferably 1 μm to 10 μm.

"Average fiber diameter" refers to an average value of the fiber diameter of 20 fibers randomly selected from a scanning electron microscope photograph.

In an embodiment, an average pore diameter (plastic nonwoven fabric) is preferably 1 μm to 20 μm, more preferably 3 μm to 20 μm, and even more preferably 5 μm to 20 μm.

"Pore diameter" refers to a width of gaps between fibers. "Average pore diameter" refers to an average value of the pore diameters of 20 fibers randomly selected from a scanning electron microscope photograph.

In an embodiment, a thickness (plastic nonwoven fabric) is preferably 5 μm to 25 μm, and more preferably 5 μm to 15 μm.

<Manufacturing method (power storage device separator)>

A manufacturing method (power storage device separator) may be, for example, a method including a coating process of coating the power storage device separator slurry on a base material, and a drying process of drying the coated power storage device separator slurry.

(Coating process)

Examples of a coating method include coating, printing, transferring, immersion, etc.

Examples of coating include blade coating, rod coating, reverse roll coating, lip coating, die coating, curtain coating, air knife coating, etc.

Examples of printing include flexographic printing, screen printing, offset printing, gravure printing, inkjet printing, etc.

Examples of transferring include roll transferring, film transferring, etc.

Examples of immersion include dipping and the like.

(Drying process)

Examples of a drying method include air drying, irradiation drying, vacuum drying, etc.

Examples of air drying include warm air drying, hot air drying, low humidity air drying, etc.

Examples of irradiation drying include infrared irradiation drying, far-infrared irradiation drying, electron beam irradiation drying, etc.

A drying temperature is preferably 40°C to 90°C, and more preferably 50°C to 80°C.

A drying time is preferably 5 seconds to 3 minutes, and more preferably 15 seconds to 2 minutes.

The manufacturing method (power storage device separator) may optionally include a pressing process.

Examples of a pressing means include a die press, a roll press, etc.

The power storage device separator may be used as, for example, a battery separator, a non-aqueous secondary battery separator, a lithium ion battery separator, a sodium ion battery separator, etc.

[Power storage device separator/electrode laminate]

The disclosure relates to a power storage device separator/electrode laminate having a dried product of the

above power storage device slurry on an active material side of an electrode.

The power storage device separator/electrode laminate is obtained by applying the power storage device slurry to an electrode and drying it.

A manufacturing method (power storage device separator/electrode laminate) may be a method including the following processes.

(1) A process of applying an electrode material-containing slurry to a current collector
(2) A process of drying the electrode material-containing slurry
(3) A process of pressing a dried product of the electrode material-containing slurry
(4) A process of applying a power storage device separator slurry to the dried product of the electrode material-containing slurry
(5) A process of drying the power storage device separator slurry

Examples of an application method, a drying method, and a pressing method include the methods described above.

Examples of applications (power storage device separator/electrode laminate) include a battery separator/-electrode laminate, a battery separator/negative electrode laminate, a battery separator/positive electrode laminate, a non-aqueous secondary battery separator/electrode laminate, a non-aqueous secondary battery separator/negative electrode laminate, a non-aqueous secondary battery separator/positive electrode laminate, a lithium ion battery separator/electrode laminate, a lithium ion battery separator/negative electrode laminate, a lithium ion battery separator/positive electrode laminate, a sodium ion battery separator/electrode laminate, a sodium ion battery separator/negative electrode laminate, a sodium ion battery separator/positive electrode laminate, etc.

[Power storage device]

The disclosure relates to a power storage device.

In an embodiment, the power storage device includes the above power storage device electrode.

In an embodiment, the power storage device includes the above power storage device separator.

In an embodiment, the power storage device includes the above power storage device separator/electrode laminate.

(Electrolytic solution)

The power storage device may optionally include an electrolytic solution. Examples of an electrolytic solution include a solution in which a supporting electrolyte is dissolved in a non-aqueous solvent.

The non-aqueous solvent may be used alone or as a combination of two or more types.

Examples of the non-aqueous solvent include a chain carbonate solvent, a cyclic carbonate solvent, a chain ether solvent, a cyclic ether solvent, a chain ester solvent, a cyclic ester solvent, acetonitrile, etc.

Examples of a chain carbonate solvent include diethyl carbonate, dimethyl carbonate, ethyl methyl carbonate, etc.

Examples of a cyclic carbonate solvent include ethylene carbonate, propylene carbonate, butylene carbonate, etc.

Examples of a chain ether solvent include 1,2-dimethoxyethane and the like.

Examples of a cyclic ether solvent include tetrahydrofuran, 2-methyltetrahydrofuran, sulfolane, 1,3-dioxolane, etc.

Examples of a chain ester solvent include methyl formate, methyl acetate, methyl propionate, etc.

Examples of a cyclic ester solvent include $\gamma$-butyrolactone, $\gamma$-valerolactone, etc.

In an embodiment, the non-aqueous solvent is preferably a combination of cyclic carbonate and chain carbonate.

The supporting electrolyte may be used alone or as a combination of two or more types.

Examples of the supporting electrolyte include lithium salt and the like. Examples of lithium salt include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, $(C_2F_5SO_2)NLi$, etc. In an embodiment, the supporting electrolyte is preferably $LiPF_6$, $LiClO_4$, and $CF_3SO_3Li$.

In an embodiment, the non-aqueous electrolytic solution may optionally include a film-forming agent. The film-forming agent may be used alone or as a combination of two or more types.

Examples of the film-forming agent include carbonate, alkene sulfide, sultone, acid anhydride, etc.

Examples of carbonate include vinylene carbonate, vinyl ethylene carbonate, vinyl ethyl carbonate, methyl phenyl carbonate, fluoroethylene carbonate, difluoroethylene carbonate, etc.

Examples of alkene sulfide include ethylene sulfide, propylene sulfide, etc.

Examples of sultone include 1,3-propane sultone, 1,4-butane sultone, etc.
Examples of acid anhydride include maleic anhydride, succinic anhydride, etc.
In an embodiment, a mass% content (film-forming agent/electrolytic solution) is preferably 10 mass% or less, more preferably 8 mass% or less, even more preferably 5 mass% or less, and particularly preferably 2 mass% or less.
Examples of a form (power storage device) include a cylinder type in which sheet electrodes and separators are configured in a spiral shape, a cylinder type with an inside-out structure combining pellet electrodes and separators, a coin type in which pellet electrodes and separators are laminated, etc.
Examples of the manufacturing method (power storage device) include methods described in Japanese Patent Application Laid-Open No. 2013-089437, and the like.
Examples of applications (power storage device) include a battery, a non-aqueous secondary battery, a lithium ion battery, a sodium ion battery, etc.

## Examples

The present invention will be specifically described through Examples and Comparative Examples below. However, the above description and Examples below are not described for the purpose of limiting the present invention. The present invention is limited only by the scope of the claims. Unless otherwise specified below, numerical values such as parts, %, etc. are on a mass basis.

### Example 1

Ion-exchanged water 733.6 g, 50% acrylamide 100 g (40 mol%), 80% acrylic acid 47.5 g (30 mol%), and acrylonitrile 28.0 g (30 mol%) were placed in a reaction apparatus equipped with a stirrer, a thermometer, a reflux condenser, a nitrogen gas introduction tube, and three dropping funnels. After removing oxygen from the reaction system by passing nitrogen gas, the temperature was raised to 55°C. Then, 2,2'-azobis-2-amidino propane dihydrochloride (manufactured by NIPPOH CHEMICALS CO., LTD., product name "NC-32P") 0.116 g (0.1 mass%) and ion-exchanged water 5 g were added, the temperature was raised to 80°C, and reaction was performed for 3 hours.
Subsequently, 2,2'-azobis-2-amidino propane dihydrochloride (manufactured by NIPPOH CHEMICALS CO., LTD., product name "NC-32P") 1.16 g (1 mass%) was added, and reaction was performed at 80°C for 2 hours to manufacture a power storage device binder aqueous solution.
Unless specifically mentioned, the following examples were carried out in the same manner as Example 1 except for changes as shown in the table.

<Manufacturing of hydrolyzed partial condensate of polyalkoxysilane>

Ion-exchanged water 100 g, methanol 100 g, and 3-aminopropyltrimethoxysilane (manufactured by Shin-Etsu Chemical Co., Ltd., product name "KBM-903") 200 g were placed in a reaction apparatus equipped with a stirrer, a thermometer, a reflux condenser, and a nitrogen gas introduction tube, and reaction was performed at 25°C for 0.5 hours to obtain a uniform aqueous solution containing a hydrolyzed partial condensate of polyalkoxysilane with a degree of condensation of 1.4 and a weight average molecular weight of 160.
In the case where the amount of Si-HC is not 0 in the table, the hydrolyzed partial condensate of polyalkoxysilane was added to the aqueous solution in the amount shown in the table below. Subsequently, a uniform aqueous solution was obtained by stirring for 30 minutes.

[Table 1]

| | AM (mol%) | AA (mol%) | AN (mol%) | SMAS (mol%) | Neutralizing salt | Neutralization rate (mol%) | Si-HC | Prepolymerization (mass%) | Post-polymerization (mass%) | Polymerization initiator unit (mass%) | AM (mass ppm) | Pencil hardness | Breaking strength | Initial Coulombic efficiency | Discharge capacity retention rate |
|---|---|---|---|---|---|---|---|---|---|---|---|---|---|---|---|
| Example 1 | 40 | 30 | 30 | 0 | Na | 80 | 0 | NC-32P 0.1 | NC-32P 1.0 | 0.07 | 138 | A | A | B | A |
| Example 2 | 80 | 10 | 10 | 0 | Na | 80 | 0.5 | NC-32P 0.1 | NC-32P 1.0 | 0.04 | 46 | A | A | A | A |
| Example 3 | 65 | 5 | 30 | 0 | Na | 80 | 0.5 | NC-32P 0.1 | NC-32P 1.0 | 0.05 | 54 | A | A | A | A |
| Example 4 | 40 | 30 | 30 | 0 | Ca<br>Na | 1<br>89 | 0 | NC-32P 1.0 | NC-32P 0.1 | 0.3 | 254 | A | A | B | B |
| Example 5 | 39.9 | 30 | 30 | 0.1 | Na | 80 | 0 | NC-32P 0.1 | NC-32P 1.0 | 0.1 | 154 | A | B | B | B |
| Example 6 | 40 | 20 | 40 | 0 | Na | 80 | 0 | APS/SPS 0.3/0.3 | NC-32P 0.2 | 0.05 | 510 | A | A | A | B |
| Example 7 | 99.5 | 0 | 0 | 0.5 | - | - | 0 | NC-32P 0.5 | NC-32P 0.5 | 0.3 | 90 | B | B | A | A |
| Comparative Example 1 | 29.9 | 50 | 20 | 0.1 | Na | 90 | 0 | NC-32P 1.0 | - | 0.2 | 1120 | B | B | C | C |
| Comparative Example 2 | 40 | 40 | 20 | 0 | Na | 90 | 0 | NC-32P 5.0 | NC-32P 5.0 | 1.1 | Less than 0.01 | B | B | C | C |
| Comparative Example 3 | 50 | 30 | 20 | 0 | Na | 90 | 0 | KPS 0.2 | KPS 1.0 | - | Gelling | | | | |

- AM: acrylamide
- AA: acrylic acid
- AN: acrylonitrile
- SMAS: sodium methallyl sulfonate
- Na: sodium hydroxide
- Ca: calcium hydroxide
- Si-HC: hydrolyzed partial condensate of polyalkoxysilane
- APS: ammonium persulfate
- SPS: sodium persulfate
- KPS: potassium persulfate

"Neutralization rate" refers to a rate with respect to 100 mol% of carboxyl group included in an acrylic acid unit.
The monomer content was measured as follows.

(1) Preparation (standard solution)

Monomer ((meth)acrylamide, (meth)acrylonitrile) was collected in a 20 mL screw tube, diluted with ultrapure water, and standard aqueous solutions of 2000 ppm, 1000 ppm, 500 ppm, 100 ppm, 10 ppm, 1 ppm, and 0.5 ppm were prepared.

(2) (Meth)acrylamide calibration curve

Using the standard solutions, measurements were performed under the following conditions, and a calibration curve was created.

Measurement instrument: HPLC (Agilent 1260 Infinity2 PrimeLC)
Column: InertSustain AQ-C18
Column oven temperature: 40°C
Eluent: phosphate buffer solution (sodium dihydrogen phosphate/ultrapure water = 8/1000 (v/v) aqueous solution)
Measurement concentration: 0.20 mass% (water-soluble polymer concentration)
Injection volume: 4μL

(3) Preparation (sample)

Each sample was diluted 50 times in a screw tube. Measurement was performed under the conditions of (2), and the monomer content in the sample was determined from the calibration curve.

<Breaking strength>

The power storage device binder aqueous solution was applied to the surface of a polypropylene flat plate, heated at 120°C in an oven until the weight became constant, and the non-volatile content of the power storage device binder aqueous solution, which was a residue, was obtained. The obtained non-volatile content was molded into a size of 50 mm in length, 20 mm in width, and 50 μm in thickness to prepare a molded film composed of the non-volatile content of the power storage device binder aqueous solution.
The breaking strength of the prepared molded film was measured using a universal testing machine (AGX-V, manufactured by Shimadzu Corporation) at a tensile speed of 50 mm/min.

A: 30 MPa or higher
B: less than 30 MPa

<Pencil hardness>

A film was manufactured by coating and drying the binder aqueous solution under the following conditions. The pencil hardness (film) was measured according to the following test method.

Substrate: glass plate

Coating method: applicator (thickness 200 μm)
Drying conditions: 100°C, 30 minutes
Test method: general test method of JIS K-5401
A: 3H or higher
B: 2H or lower

<Operation evaluation (power storage device electrode)>

(1-1) Manufacturing (power storage device electrode slurry)

Using a commercially available rotation-revolution mixer (product name "THINKYMIXER", manufactured by THINKY CORPORATION), the power storage device binder aqueous solution obtained in Example at 7 parts by mass on a non-volatile content basis, silicon monoxide particles with a D50 of 5 μm at 50 parts by mass, and natural graphite (manufactured by Ito Graphite Co., Ltd, product name "Z-5F") at 50 parts by mass were mixed in a dedicated container for the mixer. Ion-exchanged water was added thereto to reach a non-volatile content concentration of 40%, and the container was set in the above mixer. Subsequently, after kneading at 2000 rpm for 10 minutes, defoaming was performed for 1 minute to obtain a power storage device electrode slurry.

(1-2) Manufacturing (power storage device electrode)

On the surface of a current collector composed of a copper foil, the above power storage device electrode slurry was uniformly applied by a doctor blade method such that a post-drying film thickness becomes 25 μm, was dried at 80°C for 30 minutes, and then was heat-treated at 100°C for 60 minutes to obtain an electrode. Subsequently, an electrode was obtained by press-processing using a roll press machine such that the density of the film (electrode active material layer) became 1.2 g/cm$^3$.

(1-3) Manufacturing (power storage device)

In an argon-substituted glove box, the above electrode punched and formed to a diameter of 16 mm was placed on a two-electrode coin cell (manufactured by Hohsen Corp., product name "HS Flat Cell"). Next, a separator (manufactured by CS TECH CO., LTD, product name "Selion P2010") composed of a polypropylene porous film punched to a diameter of 24 mm was placed, and after further injecting 500 μL of the electrolytic solution in a manner avoiding air entry, a commercially available metal lithium foil punched and formed to 16 mm was placed. The power storage device (lithium half-cell) was assembled by closing and sealing the exterior body of the two-electrode coin cell with screws. The electrolytic solution used herein was a solution in which $LiPF_6$ was dissolved at a concentration of 1 mol/L in a solvent of ethylene carbonate/dimethyl carbonate = 3/7 (volume ratio).

(1-4) Charge-discharge measurement

The lithium half-cell was placed in a constant temperature bath at 25°C, and charging was started at a constant current (0.1 C), with charging completed (cut-off) at a time point at which the voltage reached 0.01 V. Subsequently, discharging was started at a constant current (0.1 C), with discharging completed (cut-off) at a time point at which the voltage reached 1.0 V, and this charge-discharge cycle was repeated 30 times.
In the above measurement conditions, "1 C" refers to a current value at which a cell with a specific electrical capacity is discharged at a constant current and completes discharging in 1 hour. For example, "0.1 C" refers to a current value with which discharging is completed over 10 hours, and "10 C" refers to a current value with which discharging is completed in 0.1 hours.

<Initial Coulombic efficiency>

The initial Coulombic efficiency was calculated according to the following formula based on values of an initial charge capacity (mAh) and an initial discharge capacity (mAh) when the charge-discharge cycle test was performed at room temperature (25°C).

Initial Coulombic efficiency = (initial discharge capacity)/(initial charge capacity) × 100 (%)

A: 65% or higher
B: 60% or higher and less than 65%
C: less than 60%

<Discharge capacity retention rate>

The discharge capacity retention rate was calculated according to the following formula.

Discharge capacity retention rate = {(discharge capacity at 30th cycle)/(discharge --> capacity at 1st cycle)} × 100 (%)

A: 80% or higher
B: 75% or higher and less than 80%
C: less than 75%

<Operation evaluation (power storage device separator)>

(2-1) Manufacturing (power storage device separator slurry)

5 parts by mass of the power storage device binder aqueous solution obtained in Example on non-volatile content basis and 113 parts by mass of water were stirred and mixed, and 100 parts by mass of boehmite (average particle diameter 0.8 μm) was added as a non-conductive particle, and dispersed and stirred for 60 minutes at 15000 rpm using a homogenizer (T25 digital ULTRA-TURRAX manufactured by IKA). Furthermore, ion-exchanged water was added to adjust the viscosity, and a power storage device separator slurry was manufactured.

(2-2) Manufacturing (separator): lamination of layer (coating layer) of separator slurry

A single-layer polyethylene separator base material (PE base material) manufactured by a wet method with a width of 250 mm, a length of 200 mm, and a thickness of 6 μm was prepared. The power storage device separator slurry was applied on one surface of the separator using a gravure coater such that a post-drying thickness becomes 3.0 μm, and was dried to obtain a power storage device separator.

(2-3) Manufacturing (Power Storage Device)

A power storage device was manufactured by the same method as in the above (1-3) Manufacturing (Power Storage Device), except that the separator manufactured above was used instead.
The power storage device having the power storage device separator manufactured using the power storage device binder aqueous solution of the example functioned without any problems.

## Claims

**1.** A power storage device binder aqueous solution comprising a water-soluble polymer, (meth)acrylamide, and (meth) acrylonitrile, wherein

the water-soluble polymer comprises 0.01 mass% to 1 mass% of a polymerization initiator unit, and
a content of the (meth)acrylamide with respect to the water-soluble polymer is 0.01 mass ppm or more and less than 1000 mass ppm.

**2.** A power storage device slurry comprising a water-soluble polymer, (meth)acrylamide, (meth)acrylonitrile, and water, wherein

the water-soluble polymer comprises 0.01 mass% to 1 mass% of a polymerization initiator unit, and
a content of the (meth)acrylamide with respect to the water-soluble polymer is 0.01 mass ppm or more and less than 1000 mass ppm.

**3.** The power storage device slurry according to claim 2, comprising an electrode active material.

4. The power storage device slurry according to claim 2, comprising a non-conductive particle.

5. A power storage device electrode comprising a dried product of the power storage device slurry according to claim 2 or 3 on a current collector.

6. A power storage device separator comprising a dried product of the power storage device slurry according to claim 2 or 4 on a base material.

7. A power storage device separator/electrode laminate comprising a dried product of the power storage device slurry according to claim 2 or 4 on an active material side of an electrode.

8. A power storage device comprising the power storage device electrode according to claim 5.

9. A power storage device comprising the power storage device separator according to claim 6.

10. A power storage device comprising the power storage device separator/electrode laminate according to claim 7.

**INTERNATIONAL SEARCH REPORT**

International application No. **PCT/JP2023/032604**

**A. CLASSIFICATION OF SUBJECT MATTER**

***H01M 4/62***(2006.01)i; ***C08F 220/56***(2006.01)i; ***C08L 101/14***(2006.01)i; ***H01M 4/13***(2010.01)i; ***H01M 4/139***(2010.01)i; ***H01M 50/42***(2021.01)i; ***H01M 50/423***(2021.01)i; ***H01M 50/449***(2021.01)i; ***H01M 50/46***(2021.01)i

FI: H01M4/62 Z; C08F220/56; C08L101/14; H01M4/13; H01M4/139; H01M50/42; H01M50/423; H01M50/449; H01M50/46

According to International Patent Classification (IPC) or to both national classification and IPC

**B. FIELDS SEARCHED**

Minimum documentation searched (classification system followed by classification symbols)

H01M4/62; C08F220/56; C08L101/14; H01M4/13; H01M4/139; H01M50/42; H01M50/423; H01M50/449; H01M50/46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2017/056467 A1 (ZEON CORP) 06 April 2017 (2017-04-06) claims 1-2, 5, paragraph [0035], [0038], [0093], example 1 | 1-10 |
| A | WO 2015/186363 A1 (ZEON CORP) 10 December 2015 (2015-12-10) claim 1, paragraph [0181] | 1-10 |
| A | JP 2019-57488 A (ARAKAWA CHEM IND) 11 April 2019 (2019-04-11) claims 1, 8-9, table 1, production examples 4, 5 | 1-10 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 November 2023** | **28 November 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/032604**

| Patent document cited in search report | Publication date (day/month/year) | Patent family member(s) | Publication date (day/month/year) |
|---|---|---|---|
| WO 2017/056467 A1 | 06 April 2017 | EP 3358660 A1<br>claims 1-2, 5, paragraphs [0055], [0060], [0133]-[0136], example 1<br>US 2018/0258202 A1<br>CN 108028384 A<br>KR 10-2018-0063077 A | |
| WO 2015/186363 A1 | 10 December 2015 | EP 3154113 A1<br>claim 1, paragraphs [0384]-[0394]<br>US 2017/0062828 A1<br>CN 106463732 A<br>KR 10-2017-0012226 A | |
| JP 2019-57488 A | 11 April 2019 | CN 108666499 A<br>KR 10-2018-0109740 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018006333 A
- JP 2013089437 A

### Non-patent literature cited in the description

- Handbook of Chemistry: Pure Chemistry II. Chemical Society of Japan